# EUROPEAN PATENT SPECIFICATION

(11) **EP 4 182 716 B1**
(45) Date of publication and mention of the grant of the patent: **22.04.2026**
(21) Application number: 20945844.7
(22) Date of filing: 20.07.2020
(51) Int. Cl.: G01S 5/02, G01S 5/00, H04W 64/00, G01S 13/76, G01S 13/931

(54) **BASE STATION-ASSISTED USER EQUIPMENT-TO-USER EQUIPMENT POSITIONING**
BASISSTATIONSUNTERSTÜTZTE BENUTZERGERÄT-ZU-BENUTZERGERÄTEPOSITIONIERUNG
POSITIONNEMENT D'UN ÉQUIPEMENT UTILISATEUR PAR RAPPORT À UN ÉQUIPEMENT D'UTILISATEUR ASSISTÉ PAR UNE STATION DE BASE

(43) Date of publication of application: 24.05.2023
(73) Proprietor: QUALCOMM Incorporated, San Diego, CA 92121-1714 (US)
(72) Inventor: ZHU, Xipeng, San Diego, California 92121-1714 (US); HUANG, Fei, San Diego, California 92121-1714 (US); ZHANG, Duo, San Diego, California 92121-1714 (US); CHENG, Hong, San Diego, California 92121-1714 (US); MANOLAKOS, Alexandros, San Diego, California 92121-1714 (US); GULATI, Kapil, San Diego, California 92121-1714 (US); JI, Tingfang, San Diego, California 92121-1714 (US); HUANG, Yi, San Diego, California 92121-1714 (US); COOPER, Rotem, San Diego, California 92121-1714 (US); BERGAN, Charles, San Diego, California 92121-1714 (US); SHAH, Jigneshkumar, San Diego, California 92121-1714 (US)
(74) Representative: Reddie & Grose LLP
(86) International application number: PCT/CN2020/103094
(87) International publication number: WO 2022/016335

(56) References cited:
- WO-A1-2016/048509
- WO-A1-2017/023474
- WO-A1-2019/133495
- CN-A- 101 902 684
- CN-A- 104 244 404
- INSTITUTE FOR INFORMATION INDUSTRY (III): "Refine positioning of legacy UE with assistance by nearby ProSe-enabled UE", 3GPP DRAFT; R2-154414_REFINE POSITIONING OF LEGACY UE WITH ASSISTANCE BY NEARBY PROSE-ENABLED UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Malmö, Sweden; 20151005 - 20151009, 4 October 2015 (2015-10-04), Mobile Competence Centre ; 650, route des Lucioles ; F-06921 Sophia-Antipolis Cedex ; France , XP051004985

## Description

### BACKGROUND OF THE DISCLOSURE

### 1. Field of the Disclosure

Various aspects described herein generally relate to wireless positioning.

### 2. Description of the Related Art

Wireless communication systems have developed through various generations, including a first-generation analog wireless phone service (1G), a second-generation (2G) digital wireless phone service (including interim 2.5G networks), a third-generation (3G) high speed data, Internet-capable wireless service and a fourth-generation (4G) service (e.g., LTE or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the global system for mobile communication (GSM), etc.

A fifth generation (5G) wireless standard, referred to as New Radio (NR), enables higher data transfer speeds, greater numbers of connections, and better coverage, among other improvements. The NR standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large wireless sensor deployments. Consequently, the spectral efficiency of NR mobile communications should be significantly enhanced compared to the current 4G standard. Furthermore, signaling efficiencies should be enhanced and latency should be substantially reduced compared to current standards.

Leveraging the increased data rates and decreased latency of 5G, among other things, vehicle-to-everything (V2X) communication technologies are being implemented to support autonomous driving applications, such as wireless communications between vehicles, between vehicles and the roadside infrastructure, between vehicles and pedestrians, etc.

International Patent Application Publication WO 2017/023474 A1 relates to methods and apparatus for wireless communication. The apparatus, which may be an eNB, may be configured to receive a first message from a UE, the first message including at least one of a first request to participate in D2D positioning or a second request to participate in D2D ranging. The apparatus may be configured to determine at least one of whether to allow the UE to participate in D2D positioning or whether to allow the UE to participate in D2D ranging based on the received first message. The apparatus may be configured to transmit a second message to the UE based on the determination.

International Patent Application Publication WO 2016/048509 A1 relates to a method for determining the position of a UE based on information communication through direct UE-to-UE communications. A UE may receive, via a direct connection with a second UE, a positioning reference signal from which timing information, relating to distance between the UE and second UE, is derivable. The UE determines, based on the position reference signal, a first position metric that relates to a position of the UE with respect to the second UE, and determines, based on position metric, a location of the UE.

### SUMMARY

The scope of the present invention is defined by the scope of the appended claims. Any embodiments which do not fall within the scope of the claims are examples which are helpful for understanding the invention, but do not form a part of the invention.

### BRIEF DESCRIPTION OF THE DRAWINGS

The accompanying drawings are presented to aid in the description of examples of one or more aspects of the disclosed subject matter and are provided solely for illustration of the examples and not limitation thereof:
FIG. 1 illustrates an exemplary wireless communications system in accordance with one or more aspects of the disclosure.
FIGS. 2A and 2B illustrate example wireless network structures, according to various aspects.
FIGS. 3A to 3C are simplified block diagrams of several sample aspects of components that may be employed in wireless communication nodes and configured to support communication as taught herein.
FIG. 4 illustrates an exemplary wireless communication system in which a vehicle user equipment (V-UE) is exchanging ranging signals with a roadside unit (RSU) and another V-UE, according to aspects of the disclosure.
FIG. 5 is a timeline illustrating a three-phase communication protocol, according to aspects of the disclosure.
FIGS. 6 and 7 illustrate call flows of exemplary base station-assisted UE-UE positioning procedures, according to aspects of the disclosure.
FIG. 8 is a diagram of an exemplary base station-assisted UE-UE positioning procedure between a serving base station, an initiating UE, and a target UE.
FIG. 9 illustrates a call flow of an exemplary handover procedure during a base station-assisted UE-UE positioning procedure, according to aspects of the disclosure.
FIGS. 10 and 11 illustrate exemplary methods for wireless positioning, according to aspects of the disclosure.

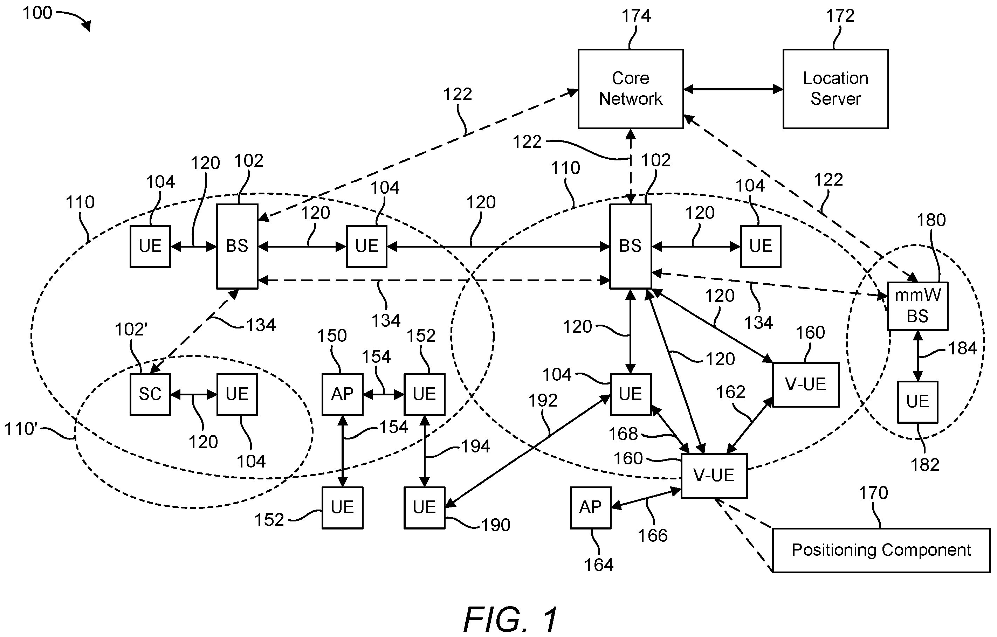

Figures 1-5, 7-11 and their description are not in accordance with all aspects of the invention as defined in the independent claims. They are therefore present for illustration purposes or to highlight specific aspects or features of the claims.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" (BS) are not intended to be specific or otherwise limited to any particular radio access technology (RAT), unless otherwise noted. In general, a UE may be any wireless communication device (e.g., vehicle on-board computer, vehicle navigation device, mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as a "mobile device," an "access terminal" or "AT," a "client device," a "wireless device," a "subscriber device," a "subscriber terminal," a "subscriber station," a "user terminal" or "UT," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

In some cases, a UE may be categorized as a vehicle UE (V-UE) or a pedestrian UE (P-UE). A V-UE is any in-vehicle wireless communication device, such as a navigation system, a warning system, a heads-up display (HUD), an on-board computer, etc. Alternatively, a V-UE may be a portable wireless communication device (e.g., a cell phone, tablet computer, etc.) that is carried by the driver of the vehicle or a passenger in the vehicle. The term "V-UE" may refer to the in-vehicle wireless communication device or the vehicle itself, depending on the context. The term "vehicle" may refer to a truck, an automobile, a motorcycle, a train, an airplane, or any other motorized conveyance. A P-UE is a portable wireless communication device that is carried by a pedestrian (i.e., a user that is not driving or riding in a vehicle, but may be riding a bicycle, a scooter, or other non-motorized conveyance).

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs including supporting data, voice and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference RF signals (or simply "reference signals") the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

According to various aspects, **FIG. 1** illustrates an exemplary wireless communications system 100. The wireless communications system 100 (which may also be referred to as a wireless wide area network (WWAN)) may include various base stations 102 (labelled "BS") and various UEs 104. The base stations 102 may include macro cell base stations (high power cellular base stations) and/or small cell base stations (low power cellular base stations). In an aspect, the macro cell base stations 102 may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 174 (e.g., an evolved packet core (EPC) or 5G core (5GC)) through backhaul links 122, and through the core network 174 to one or more location servers 172 (which may be part of core network 174 or may be external to core network 174). In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labelled "SC" for "small cell") may have a coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a mmW base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-collocated, meaning that they appear to the receiver (e.g., a UE) as having the same parameters, regardless of whether or not the transmitting antennas of the network node themselves are physically collocated. In NR, there are four types of quasi-collocation (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). mmW frequency bands generally include the FR2, FR3, and FR4 frequency ranges. As such, the terms "mmW" and "FR2" or "FR3" or "FR4" may generally be used interchangeably.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links (sometimes referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

Leveraging the increased data rates and decreased latency of NR, among other things, vehicle-to-everything (V2X) communication technologies are being implemented to support intelligent transportation systems (ITS) applications, such as wireless communications between vehicles (vehicle-to-vehicle (V2V)), between vehicles and the roadside infrastructure (vehicle-to-infrastructure (V2I)), and between vehicles and pedestrians (vehicle-to-pedestrian (V2P)). The goal is for vehicles to be able to sense the environment around them and communicate that information to other vehicles, infrastructure, and personal mobile devices. Such vehicle communication will enable safety, mobility, and environmental advancements that current technologies are unable to provide. Once fully implemented, the technology is expected to reduce unimpaired vehicle crashes by 80%.

Still referring to FIG. 1, the wireless communications system 100 may include multiple V-UEs 160 that may communicate with base stations 102 over communication links 120 (e.g., using the Uu interface) or with mmW base station(s) 180 over communication links 184 (not shown). V-UEs 160 may also communicate directly with each other over a wireless unicast sidelink 162, with a roadside access point 164 (also referred to as a "roadside unit" or "RSU") over a sidelink 166, or with UEs 104 over a sidelink 168 using P2P/D2D protocols (e.g., "PC5," an LTE V2X D2D interface) or ProSe direct communications. Sidelink communication may be used for D2D media-sharing, V2V communication, V2X communication (e.g., cellular V2X (cV2X) communication, enhanced V2X (eV2X) communication, etc.), emergency rescue applications, relative positioning, etc. One or more of a group of V-UEs 160 utilizing D2D communications may be within the geographic coverage area 110 of a base station 102. Other V-UEs 160 in such a group may be outside the geographic coverage area 110 of a base station 102 or be otherwise unable to receive transmissions from a base station 102. In some cases, groups of V-UEs 160 communicating via D2D communications may utilize a one-to-many (1:M) system in which each V-UE 160 transmits to every other V-UE 160 in the group. In some cases, a base station 102 facilitates the scheduling of resources for D2D communications. In other cases, D2D communications are carried out between V-UEs 160 without the involvement of a base station 102. Note that although FIG. 1 illustrates two V-UEs 160 communicating over a sidelink, as will be appreciated, any two or more UEs illustrated in FIG. 1 may communicate over a sidelink, and references to V-UEs 160 are merely exemplary.

In an aspect, the V-UEs 160, and any other UE illustrated in FIG. 1, may include a positioning component 170. The positioning component 170 may be a hardware, software, or firmware component that, when executed, causes the V-UE 160 to perform the operations described herein. For example, the positioning component 170 may be a software module stored in a memory of the V-UE 160 and executable by a processor of the V-UE 160. As another example, the positioning component 170 may be a hardware circuit (e.g., an ASIC, a field programmable gate array (FPGA), etc.) within the V-UE 160. Note that although only one UE (V-UE 160) is illustrated as including a positioning component 170, any of the illustrated UEs may include a positioning component 170.

In an aspect, the sidelinks 162, 166, 168 may operate over a communication medium of interest, which may be shared with other communications between other vehicles and/or infrastructure access points, as well as other RATs. A "medium" may be composed of one or more frequency, time, and/or space communication resources (e.g., encompassing one or more channels across one or more carriers) associated with communication between one or more transmitter / receiver pairs.

In an aspect, the sidelinks 162, 166, 168 may be cV2X links. A first generation of cV2X has been standardized in LTE, and the next generation is expected to be defined in NR. cV2X is a cellular technology that also enables device-to-device communications. In the U.S. and Europe, cV2X is expected to operate in the licensed ITS band in sub-6GHz. Other bands may be allocated in other countries. Thus, as a particular example, the medium of interest utilized by sidelinks 162, 166, 168 may correspond to at least a portion of the licensed ITS frequency band of sub-6GHz. However, the present disclosure is not limited to this frequency band or cellular technology.

In an aspect, the sidelinks 162, 166, 168 may be dedicated short-range communications (DSRC) links. DSRC is a one-way or two-way short-range to medium-range wireless communication protocol that uses the wireless access for vehicular environments (WAVE) protocol, also known as IEEE 802.11p, for V2V, V2I, and V2P communications. IEEE 802.11p is an approved amendment to the IEEE 802.11 standard and operates in the licensed ITS band of 5.9 GHz (5.85-5.925 GHz) in the U.S. In Europe, IEEE 802.11p operates in the ITS G5A band (5.875 - 5.905 MHz). Other bands may be allocated in other countries. The V2V communications briefly described above occur on the Safety Channel, which in the U.S. is typically a 10 MHz channel that is dedicated to the purpose of safety. The remainder of the DSRC band (the total bandwidth is 75 MHz) is intended for other services of interest to drivers, such as road rules, tolling, parking automation, etc. Thus, as a particular example, the mediums of interest utilized by sidelinks 162, 166, 168 may correspond to at least a portion of the licensed ITS frequency band of 5.9 GHz.

Alternatively, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Communications between the V-UEs 160 are referred to as V2V communications, communications between the V-UEs 160 and the one or more roadside access points 164 are referred to as V2I communications, and communications between the V-UEs 160 and one or more UEs 104 (where the UEs 104 are P-UEs) are referred to as V2P communications. The V2V communications between V-UEs 160 may include, for example, information about the position, speed, acceleration, heading, and other vehicle data of the V-UEs 160. The V2I information received at a V-UE 160 from the one or more roadside access points 164 may include, for example, road rules, parking automation information, etc. The V2P communications between a V-UE 160 and a UE 104 may include information about, for example, the position, speed, acceleration, and heading of the V-UE 160 and the position, speed (e.g., where the UE 104 is carried by a user on a bicycle), and heading of the UE 104.

Note that although FIG. 1 only illustrates two of the UEs as V-UEs (V-UEs 160), any of the illustrated UEs (e.g., UEs 104, 152, 182, 190) may be V-UEs. Further, although the description of FIG. 1 only describes some UEs as capable of communicating with other UEs over sidelinks (e.g., V-UEs 160, UE 190), as will be appreciated, any of the illustrated UEs may be capable of communicating over sidelinks. In addition, although only UE 182 was described as being capable of beam forming, any of the illustrated UEs, including V-UEs 160, may be capable of beam forming. Where V-UEs 160 are capable of beam forming, they may beam form towards each other (i.e., towards other V-UEs 160), towards roadside access points 164, towards other UEs (e.g., UEs 104, 152, 182, 190), etc. Thus, in some cases, V-UEs 160 may utilize beamforming over sidelinks 162, 166, and 168.

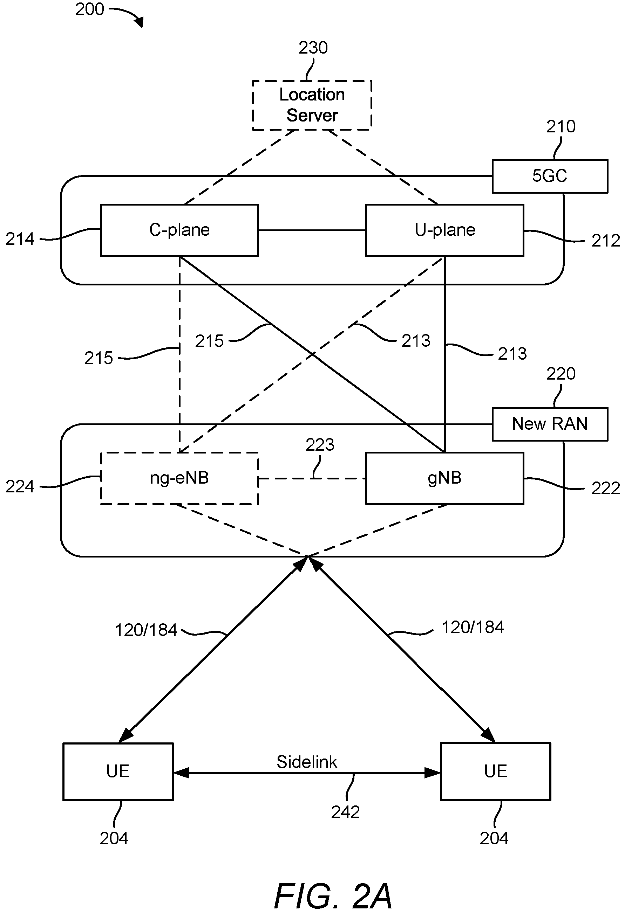

According to various aspects, **FIG. 2A** illustrates an exemplary wireless network structure 200. For example, a 5GC 210 (also referred to as a Next Generation Core (NGC)) can be viewed functionally as control plane functions (C-plane) 214 (e.g., UE registration, authentication, network access, gateway selection, etc.) and user plane functions (U-plane) 212 (e.g., UE gateway function, access to data networks, IP routing, etc.), which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, the New RAN 220 may only have one or more gNBs 222, while other configurations include one or more of both ng-eNBs 224 and gNBs 222. Either (or both) gNB 222 or ng-eNB 224 may communicate with UEs 204 (e.g., any of the UEs described herein). In an aspect, two or more UEs 204 may communicate with each other over a wireless unicast sidelink 242, which may correspond to wireless unicast sidelink 162 in FIG. 1.

Another optional aspect may include location server 230, which may be in communication with the 5GC 210 to provide location assistance for UEs 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network.

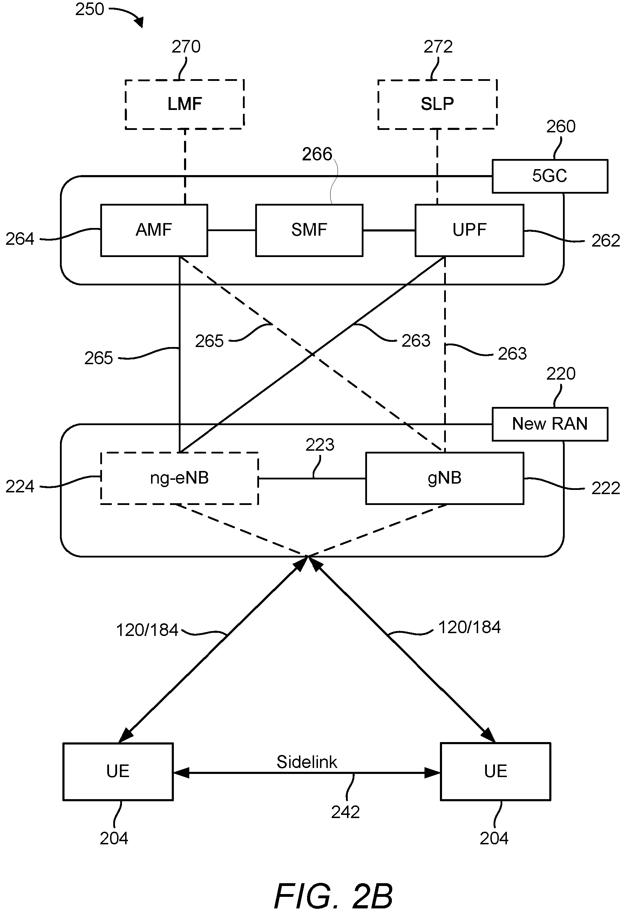

According to various aspects, **FIG. 2B** illustrates another example wireless network structure 250. For example, a 5GC 260 can be viewed functionally as control plane functions, provided by an access and mobility management function (AMF) 264, and user plane functions, provided by a user plane function (UPF) 262, which operate cooperatively to form the core network (i.e., 5GC 260). User plane interface 263 and control plane interface 265 connect the ng-eNB 224 to the 5GC 260 and specifically to UPF 262 and AMF 264, respectively. In an additional configuration, a gNB 222 may also be connected to the 5GC 260 via control plane interface 265 to AMF 264 and user plane interface 263 to UPF 262. Further, ng-eNB 224 may directly communicate with gNB 222 via the backhaul connection 223, with or without gNB direct connectivity to the 5GC 260. In some configurations, the New RAN 220 may only have one or more gNBs 222, while other configurations include one or more of both ng-eNBs 224 and gNBs 222. The base stations of the New RAN 220 communicate with the AMF 264 over the N2 interface and with the UPF 262 over the N3 interface. Either (or both) gNB 222 or ng-eNB 224 may communicate with UEs 204 (e.g., any of the UEs described herein). In an aspect, two or more UEs 204 may communicate with each other over a wireless unicast sidelink 242, which may correspond to wireless unicast sidelink 162 in FIG. 1.

The functions of the AMF 264 include registration management, connection management, reachability management, mobility management, lawful interception, transport for session management (SM) messages between the UE 204 and a Session Management Function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 which acts as a location server 230, transport for location services messages between the New RAN 220 and the LMF 270, evolved packet system (EPS) bearer identifier allocation for interworking with the EPS, and UE 204 mobility event notification. In addition, the AMF 164 also supports functionalities for non-3GPP access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., UL/DL rate enforcement, reflective QoS marking in the DL), UL traffic verification (service data flow (SDF) to QoS flow mapping), transport level packet marking in the UL and DL, DL packet buffering and DL data notification triggering, and sending and forwarding of one or more "end markers" to the source RAN node. The UPF 262 may also support transfer of location services messages over a user plane between the UE 204 and a location server such as a secure user plane location (SUPL) Location Platform (SLP) 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270 but, whereas the LMF 270 may communicate with the AMF 264, New RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g. using protocols intended to carry voice and/or data like the transmission control protocol (TCP) and/or IP).

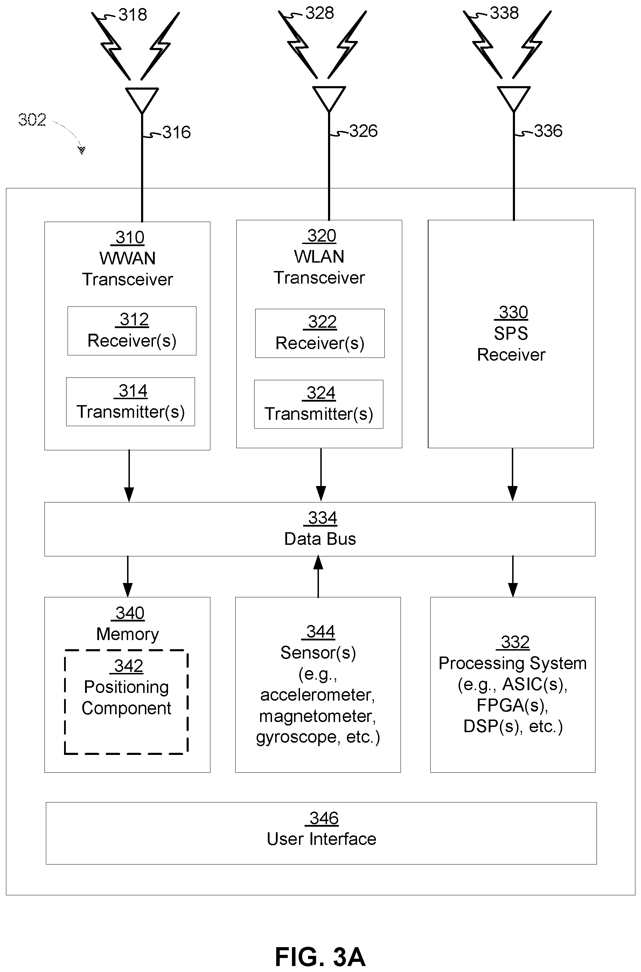

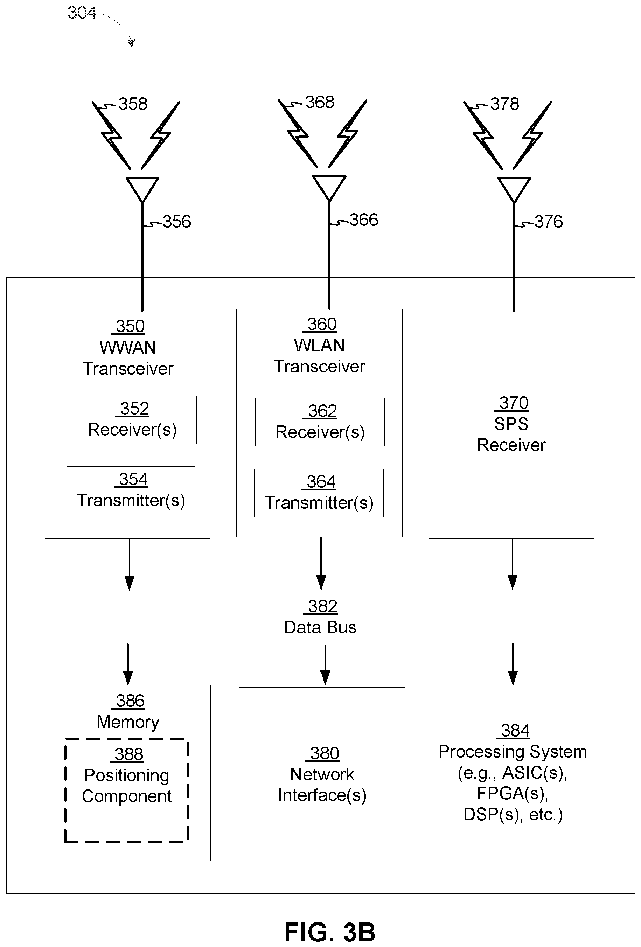

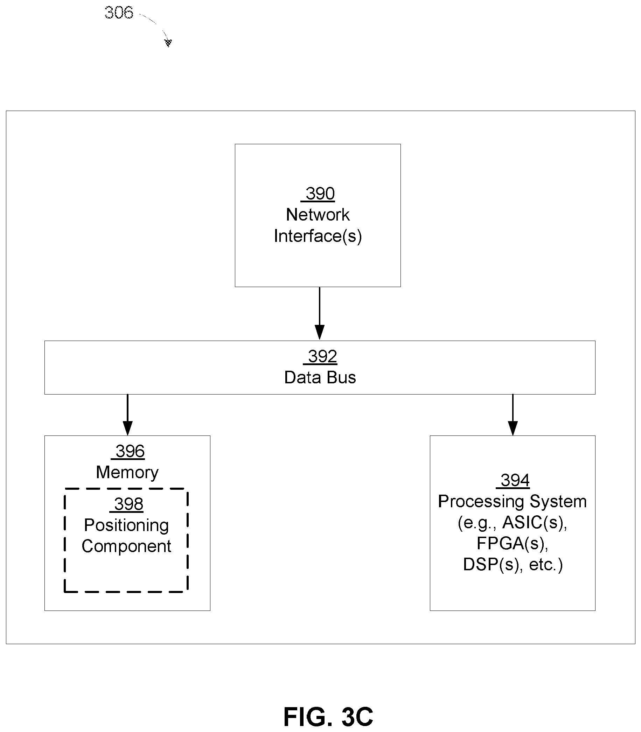

**FIGS. 3A****,** **3B****, and** **3C** illustrate several exemplary components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230, the LMF 270, and the SLP 272) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include wireless wide area network (WWAN) transceiver 310 and 350, respectively, configured to communicate via one or more wireless communication networks (not shown), such as an NR network, an LTE network, a GSM network, and/or the like. The WW AN transceivers 310 and 350 may be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 also include, at least in some cases, wireless local area network (WLAN) transceivers 320 and 360, respectively. The WLAN transceivers 320 and 360 may be connected to one or more antennas 326 and 366, respectively, for communicating with other network nodes, such as other UEs, access points, base stations, etc., via at least one designated RAT (e.g., WiFi, LTE-D, Bluetooth^{®}, etc.) over a wireless communication medium of interest. The WLAN transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively.

Transceiver circuitry including at least one transmitter and at least one receiver may comprise an integrated device (e.g., embodied as a transmitter circuit and a receiver circuit of a single communication device) in some implementations, may comprise a separate transmitter device and a separate receiver device in some implementations, or may be embodied in other ways in other implementations. In an aspect, a transmitter may include or be coupled to a plurality of antennas (e.g., antennas 316, 326, 356, 366), such as an antenna array, that permits the respective apparatus to perform transmit "beamforming," as described herein. Similarly, a receiver may include or be coupled to a plurality of antennas (e.g., antennas 316, 326, 356, 366), such as an antenna array, that permits the respective apparatus to perform receive beamforming, as described herein. In an aspect, the transmitter and receiver may share the same plurality of antennas (e.g., antennas 316, 326, 356, 366), such that the respective apparatus can only receive or transmit at a given time, not both at the same time. A wireless communication device (e.g., one or both of the transceivers 310 and 320 and/or 350 and 360) of the UE 302 and/or the base station 304 may also comprise a network listen module (NLM) or the like for performing various measurements.

The UE 302 and the base station 304 also include, at least in some cases, satellite positioning systems (SPS) receivers 330 and 370. The SPS receivers 330 and 370 may be connected to one or more antennas 336 and 376, respectively, for receiving SPS signals 338 and 378, respectively, such as global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. The SPS receivers 330 and 370 may comprise any suitable hardware and/or software for receiving and processing SPS signals 338 and 378, respectively. The SPS receivers 330 and 370 request information and operations as appropriate from the other systems, and performs calculations necessary to determine positions of the UE 302 and the base station 304 using measurements obtained by any suitable SPS algorithm.

The base station 304 and the network entity 306 each include at least one network interfaces 380 and 390 for communicating with other network entities. For example, the network interfaces 380 and 390 (e.g., one or more network access ports) may be configured to communicate with one or more network entities via a wire-based or wireless backhaul connection. In some aspects, the network interfaces 380 and 390 may be implemented as transceivers configured to support wire-based or wireless signal communication. This communication may involve, for example, sending and receiving messages, parameters, and/or other types of information.

The UE 302, the base station 304, and the network entity 306 also include other components that may be used in conjunction with the operations as disclosed herein. The UE 302 includes processor circuitry implementing a processing system 332 for providing functionality relating to, for example, wireless positioning, and for providing other processing functionality. The base station 304 includes a processing system 384 for providing functionality relating to, for example, wireless positioning as disclosed herein, and for providing other processing functionality. The network entity 306 includes a processing system 394 for providing functionality relating to, for example, wireless positioning as disclosed herein, and for providing other processing functionality. In an aspect, the processing systems 332, 384, and 394 may include, for example, one or more general purpose processors, multi-core processors, ASICs, digital signal processors (DSPs), field programmable gate arrays (FPGA), or other programmable logic devices or processing circuitry.

The UE 302, the base station 304, and the network entity 306 include memory circuitry implementing memory components 340, 386, and 396 (e.g., each including a memory device), respectively, for maintaining information (e.g., information indicative of reserved resources, thresholds, parameters, and so on). In some cases, the UE 302, the base station 304, and the network entity 306 may include positioning components 342, 388, and 398, respectively. The positioning components 342, 388, and 398 may be hardware circuits that are part of or coupled to the processing systems 332, 384, and 394, respectively, that, when executed, cause the UE 302, the base station 304, and the network entity 306 to perform the functionality described herein. In other aspects, the positioning components 342, 388, and 398 may be external to the processing systems 332, 384, and 394 (e.g., part of a modem processing system, integrated with another processing system, etc.). Alternatively, the positioning components 342, 388, and 398 may be memory modules stored in the memory components 340, 386, and 396, respectively, that, when executed by the processing systems 332, 384, and 394 (or a modem processing system, another processing system, etc.), cause the UE 302, the base station 304, and the network entity 306 to perform the functionality described herein. FIG. 3A illustrates possible locations of the positioning component 342, which may be part of the WW AN transceiver 310, the memory component 340, the processing system 332, or any combination thereof, or may be a standalone component. FIG. 3B illustrates possible locations of the positioning component 388, which may be part of the WWAN transceiver 350, the memory component 386, the processing system 384, or any combination thereof, or may be a standalone component. FIG. 3C illustrates possible locations of the positioning component 398, which may be part of the network interface(s) 390, the memory component 396, the processing system 394, or any combination thereof, or may be a standalone component.

The UE 302 may include one or more sensors 344 coupled to the processing system 332 to provide movement and/or orientation information that is independent of motion data derived from signals received by the WW AN transceiver 310, the WLAN transceiver 320, and/or the SPS receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in 2D and/or 3D coordinate systems.

In addition, the UE 302 includes a user interface 346 for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the processing system 384 in more detail, in the downlink, IP packets from the network entity 306 may be provided to the processing system 384. The processing system 384 may implement functionality for an RRC layer, a packet data convergence protocol (PDCP) layer, a radio link control (RLC) layer, and a medium access control (MAC) layer. The processing system 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer packet data units (PDUs), error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the processing system 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the processing system 332, which implements Layer-3 and Layer-2 functionality.

In the uplink, the processing system 332 provides demultiplexing between transport and logical channels, packet reassembly, deciphering, header decompression, and control signal processing to recover IP packets from the core network. The processing system 332 is also responsible for error detection.

Similar to the functionality described in connection with the downlink transmission by the base station 304, the processing system 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the processing system 384.

In the uplink, the processing system 384 provides demultiplexing between transport and logical channels, packet reassembly, deciphering, header decompression, control signal processing to recover IP packets from the UE 302. IP packets from the processing system 384 may be provided to the core network. The processing system 384 is also responsible for error detection.

For convenience, the UE 302, the base station 304, and/or the network entity 306 are shown in FIGS. 3A-C as including various components that may be configured according to the various examples described herein. It will be appreciated, however, that the illustrated blocks may have different functionality in different designs.

The various components of the UE 302, the base station 304, and the network entity 306 may communicate with each other over data buses 334, 382, and 392, respectively. The components of FIGS. 3A-C may be implemented in various ways. In some implementations, the components of FIGS. 3A-C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a positioning entity," etc. However, as will be appreciated, such operations, acts, and/or functions may actually be performed by specific components or combinations of components of the UE, base station, positioning entity, etc., such as the processing systems 332, 384, 394, the transceivers 310, 320, 350, and 360, the memory components 340, 386, and 396, the positioning components 342, 388, and 398, etc.

As noted above, one of the use cases for sidelink communication between UEs (whether V-UEs or other types of UEs) is relative positioning, referred to as "UE-to-UE" or "UE-UE" positioning. In a UE-UE positioning scenario, two or more UEs can exchange ranging signals among themselves to determine the distance(s) (and possibly angle(s)) between themselves. A V-UE can also exchange ranging signals with a roadside unit (RSU) to determine its distance (and possibly angle) from that roadside unit.

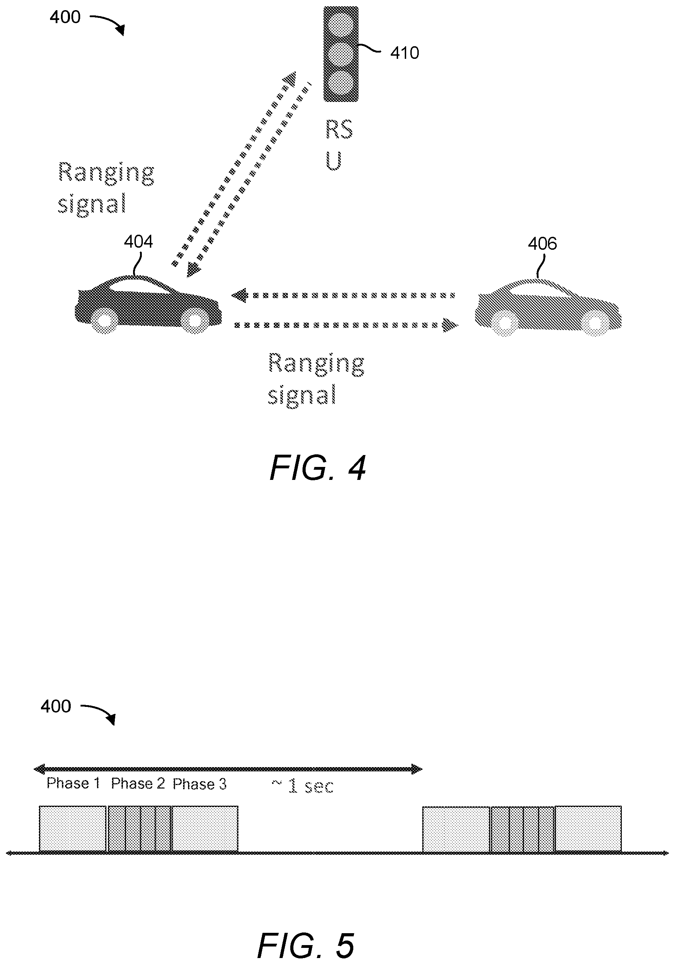

**FIG. 4** illustrates an exemplary wireless communication system 400 in which a V-UE 404 and an RSU 410 and another V-UE 406 are performing UE-UE positioning procedures, according to aspects of the disclosure. A UE-UE positioning procedure is similar to a round-trip-time (RTT) positioning procedure, in which a UE measures the time of arrival (ToA) of a downlink reference signal from a base station and responds with an uplink reference signal to be measured by the base station. Based on the difference between the transmission time of the downlink reference signal and the reception time of the uplink reference signal, the base station, UE, or location server can calculate the RTT or time of flight between the base station and the UE. From the RTT or the time of flight and the speed of light, the base station, UE, or location server can estimate the distance between the UE and the base station.

Referring to FIG. 4, a wideband (e.g., FR1) ranging signal (e.g., a Zadoff Chu sequence) is transmitted by both end points (e.g., V-UE 404 and RSU 410 and/or V-UE 404 and V-UE 406). In an aspect, the ranging signals may be positioning reference signals (PRS) as defined in LTE and NR. On receiving a ranging signal from the V-UE 404, referred to as a "measurement ranging signal," the RSU 410 and/or the V-UE 406 estimate the ToA of the measurement ranging signal. The RSU 410 and/or the V-UE 406 then respond by sending a response ranging signal to the V-UE 404. The response ranging signal identifies the measurement ranging signal to which it is responding, and may include the calculated ToA of the measurement ranging signal.

The V-UE 404 calculates the ToA of the response ranging signal(s) and uses those ToAs and the transmission time(s) of the measurement ranging signal(s) to determine the RTT(s) or time(s) of flight between the V-UE 404 and the RSU 410 and/or the V-UE 406. The V-UE 404 may also use the ToA(s) of the measurement ranging signal(s) received in the response ranging signal(s), if available. Based on the RTT(s) or time(s) of flight and the speed of light, the V-UE 404 (or other positioning entity) can estimate the distance between itself and the RSU 410 and/or the V-UE 406.

Note that this positioning procedure assumes that the involved entities (V-UEs 404 and 406, RSU 410) are time-synchronized (i.e., their system frame time is the same or is a known offset relative to the other entities). In addition, although FIG. 4 illustrates two V-UEs, as will be appreciated, they need not be V-UEs, and may instead be any other type of UE.

Referring to the transmission of ranging signals in greater detail, a three-phase protocol can be used for the transmission of ranging signals used for UE-UE positioning. **FIG. 5** is a timeline 500 illustrating the three-phase protocol, according to aspects of the disclosure. As shown in FIG. 5, the three-phase protocol occurs periodically, such as every one second. In the first phase, a transmitter (e.g., V-UE 404, RSU 410) broadcasts the relative location of its antenna(s) (compared to the center location of the transmitter), identifiers (IDs) of the sequences (i.e., the ranging signals) to be transmitted by the antenna(s) in the second phase, and the time/frequency resources on which the sequences will be transmitted in the second phase.

In the second phase, the transmitter transmits wideband sequences (e.g., the ranging signals) having the determined sequence IDs and on the determined time/frequency resources. In the third phase, the transmitter broadcasts its own GPS location (if available), pseudoranges to one or more satellites, and/or the orientation that it had during the second phase. It may also broadcast the ToAs from the second phase. That is, it broadcasts the ToAs of any PRS received during the second phase. Note that for V2I positioning, only RSUs need to perform the third phase.

In an aspect, all V-UEs and RSUs may be configured (e.g., by the applicable standard) to follow this three-phase protocol. Thus, during each phase, the transmitter may also receive signals from other V-UEs/RSUs that contain the same type of information as the transmitter transmitted. In that way, both transmitters and receivers can estimate the distances between itself and other V-UEs/RSUs.

The present disclosure provides techniques for base station-assisted UE-UE positioning. To implement base station-assisted UE-UE positioning, various aspects need to be defined, such as the subscription(s) needed for UE-UE positioning, proximity detection and notification, UE-UE positioning request and configuration, base station assistance for UE-UE positioning measurements, the radio resource configuration for UE-UE positioning measurements, mobility (e.g., handover) procedures, and UE-UE positioning in RRC_INACTIVE mode.

Referring to the subscription(s) needed for base station-assisted UE-UE positioning, a subscription for base station-assisted UE-UE positioning should be added to the UE subscription data in the UE's unified data management (UDM) and/or home subscriber server (HSS). The UDM supports the authentication credential repository and processing function (ARPF) and stores the long-term security credentials used in authentication for authentication and key agreement (AKA). In addition, it stores subscription information. The HSS is the master user database that supports IP multimedia subsystem (IMS) network entities that handle calls and sessions.

A subscription for base station-assisted UE-UE positioning may include features such as the capability and permission to measure signals from other UEs, to be measured by other UEs, and to receive and/or provide proximity notifications. A subscription may also include group information for intra-group proximity detection (i.e., notifications for when the UE is within some proximity to another group member). A group of UEs may be two or more UEs having some implicit or explicit association with each other. Examples of explicit associations would be groups of family members, friends, coworkers, etc. that have explicitly identified the other members of the group as belonging to the group. An example of an implicit association would be the users within a given geographic region, optionally satisfying some other criteria, such as type of UE, brand of UE, service provider, etc.

The type of UE (e.g., V-UE, such as a road vehicle) that will be engaged in UE-UE positioning should also be indicated to the network, such as during NAS registration. Thus, when a UE registers with the network and has a subscription for base station-assisted UE-UE positioning, it can also provide its UE type to the network (if not already stored with its subscription data). Based on the subscription (e.g., from the UDM and/or the HSS) and the UE type, the AMF (e.g., AMF 264) can inform the base station serving the UE regarding whether or not UE-UE positioning is applicable to this UE, and if so, what kind of UE-UE positioning is supported. The AMF can inform the base station of this information in, for example, an NG application protocol (NGAP) UE Context Setup or Context Modification procedure.

Referring to base station-assisted proximity detection and notification, before two UEs can engage in UE-UE positioning, they need to know that they are near enough to each other to perform UE-UE positioning. A base station can be used to detect whether two or more UEs are within sufficient proximity to perform UE-UE positioning. There are different types of proximity, and the type of proximity that a UE wishes to be informed of may be determined by the UE's subscription. A first type is intra-cell proximity, in which two UEs are located in the same cell. This can be detected based on the two or more UEs having the same beam ID and/or timing advance (TA), reporting the same or similar RSRP and/or RSRQ measurements, having similar characteristics of uplink signals (e.g., SRS, phase tracking reference signal (PTRS)), or any combination thereof. A second type of proximity is inter-cell, intra-base station proximity, in which two or more UEs are located in different cells supported by the same base station. In addition to the parameters needed for intra-cell proximity, inter-distributed unit (DU) coordination is also needed. A DU is also referred to as an RRH. A third type of proximity is inter-base station proximity, in which two or more UEs are served by different base stations. In this case, inter-base station coordination is needed with assistance from the location server (e.g., location server 230, LMF 270, SLP 272). In an aspect, two or more UEs may discover that they are proximite each other by themselves based on a pre-established UE-UE position configuration.

When one of the above types of proximity is detected, the base station can notify the proximate UEs. This can be accomplished by either unicast signaling to each UE or broadcast/multicast signaling (similar to paging). The notification should include the identifier(s) of the proximate UE(s). Once proximity is detected, one or more of the proximate UEs can request base station-assisted UE-UE positioning. When two UEs are no longer proximate each other, they should also be notified.

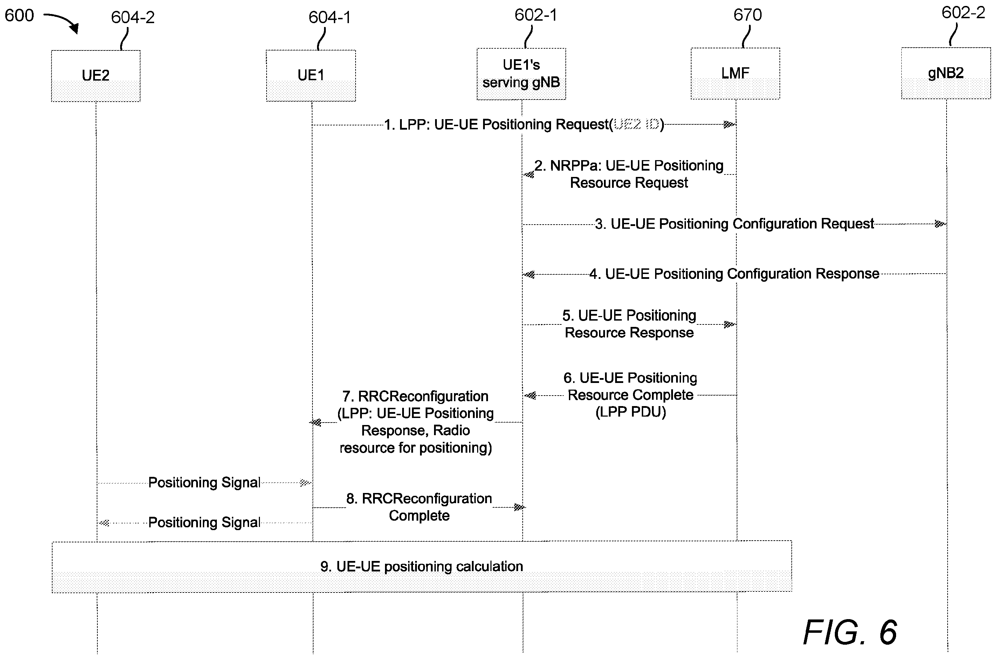

**FIG.** 6 illustrates a call flow 600 of an exemplary base station-assisted UE-UE positioning procedure, according to aspects of the disclosure. In the example of FIG. 6, the initiating UE 604-1 (e.g., any of the UEs described herein) has obtained an identifier (ID) of the target UE 604-2 (e.g., any other of the UEs described herein), such as from the serving base station based on a proximity notification, and includes it in the positioning request.

At stage 1, the initiating UE 604-1 (labeled "UE1") requests UE-UE positioning with the target UE 604-2 (labeled "UE2") by sending an LPP message to the LMF 670. The positioning request includes an identifier of the target UE 604-2 (represented as "UE2 ID"). In response, at stage 2, the LMF 670 requests the initiating UE's 604-1 serving base station (labeled "UE1's serving gNB") to configure radio resources for UE-UE positioning. The request may be sent over LPP type A (LPPa) or NR positioning protocol type A (NRPPa) signaling (as shown).

At stages 3 and 4, because the target UE 604-2 is served by a neighboring base station 602-2 (labeled "gNB2"), the serving base station 602-1 sends a UE-UE positioning configuration request to the neighboring base station 602-2. The neighboring base station 602-2 configures positioning resources for the target UE 604-2 and sends the positioning configuration to the serving base station 602-1.

At stage 5, the serving base station 602-1 sends the LMF 670 a UE-UE positioning resource response identifying the positioning resources that have been allocated by the serving base station 602-1 and the neighboring base station 602-2. At stage 6, the LMF 670 sends an LPP response to the serving base station 602-1 to forward to the initiating UE 604-1 identifying the positioning resources that have been allocated.

At stage 7, the serving base station 602-1 sends the initiating UE 604-1 an RRC reconfiguration message to configure the initiating UE 604-1 for positioning signal transmission and reception. The RRC reconfiguration message identifies the radio resources for the initiating UE 604-1 to use to send positioning signals to the target UE 604-2, information for the initiating UE 604-1 to detect positioning signals from the target UE 604-2, and assistance information for the initiating UE 604-1 to calculate the UE-UE position estimate. At stage 8, the initiating UE 604-1 sends an RRC reconfiguration complete message to the serving base station 602-1. After stage 7, the two UEs 604 are able to exchange positioning signals, and at stage 9, the initiating UE 604-1 performs the UE-UE position calculation (e.g., as described above with reference to FIGS. 4 and 5).

Note that only one of UEs 604-1 and 604-2 may need to transmit positioning signals, as indicated by the dashed line for the positioning signal transmitted by the initiating UE 604-1. In addition, while only one target UE 604-2 is shown, there may be any number of other target UEs 604-2. Further, although the target UE 604-2 is shown as served by a neighboring base station 602-2, it may be served by the serving base station 602-1.

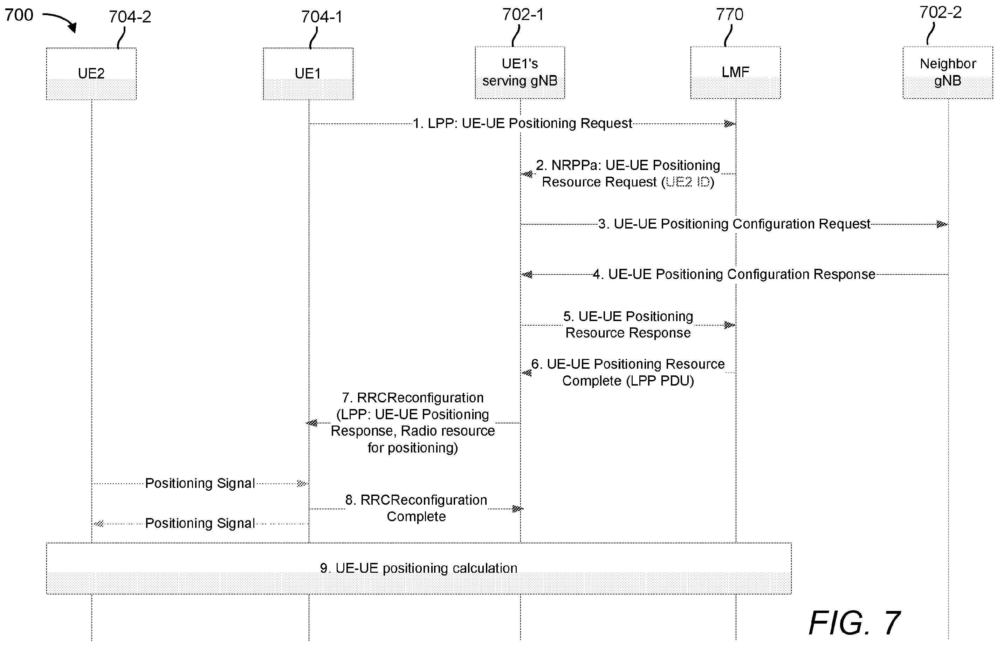

**FIG. 7** illustrates a call flow 700 of an exemplary base station-assisted UE-UE positioning procedure, according to aspects of the disclosure. In the example of FIG. 7, the initiating UE 704-1 (e.g., any of the UEs described herein) does not have an identifier (ID) of the target UE 704-2 (e.g., any other of the UEs described herein) to include in the positioning request.

At stage 1, the initiating UE 704-1 (labeled "UE1") requests UE-UE positioning with the target UE 704-2 (labeled "UE2") by sending an LPP message to the LMF 770. The positioning request does not include an identifier of the target UE 604-2. Thus, at stage 2, the LMF 770 requests the serving base station 702-1 (labeled "UE1's serving gNB") to configure radio resources for UE-UE positioning, and in addition, indicates the identifier(s) of any proximate UE(s) (target UE 704-2 in the example of FIG. 7). The identifier(s) should be identifier(s) that includes or indicates the target UE's 704-2 cell-identifier and/or base station identifier. Otherwise, the LMF 770 should indicate the cell identifier and base station identifier explicitly. The request between the LMF 770 and the serving base station 70201 may be sent over LPPa or NRPPa signaling (as shown).

Based on the cell identifier and/or base station identifier, the serving base station 70201 can identify the neighboring base station 702-2 serving the target UE 704-2. Thus, at stages 3 and 4, because the target UE 704-2 is served by a neighboring base station 702-2 (labeled "gNB2"), the serving base station 702-1 sends a UE-UE positioning configuration request to the neighboring base station 702-2. The neighboring base station 702-2 configures positioning resources for the target UE 704-2 and sends the positioning configuration to the serving base station 702-1.

**At** stage 5, the serving base station 702-1 sends the LMF 770 a UE-UE positioning resource response identifying the positioning resources that have been allocated by the serving base station 702-1 and the neighboring base station 702-2. At stage 6, the LMF 770 sends an LPP response to the serving base station 702-1 to forward to the initiating UE 704-1 identifying the positioning resources that have been allocated.

At stage 7, the serving base station 702-1 sends the initiating UE 704-1 an RRC reconfiguration message to configure the initiating UE 704-1 for positioning signal transmission and reception. The RRC reconfiguration message identifies the radio resources for the initiating UE 704-1 to use to send positioning signals to the target UE 704-2, information for the initiating UE 704-1 to detect positioning signals from the target UE 704-2, and assistance information for the initiating UE 704-1 to calculate the UE-UE position estimate. At stage 8, the initiating UE 704-1 sends an RRC reconfiguration complete message to the serving base station 702-1. After stage 7, the two UEs 704 are able to exchange positioning signals, and at stage 9, the initiating UE 704-1 performs the UE-UE position calculation (e.g., as described above with reference to FIGS. 4 and 5).

Note that only one of UEs 704-1 and 704-2 may need to transmit positioning signals, as indicated by the dashed line for the positioning signal transmitted by the initiating UE 704-1. In addition, while only one target UE 704-2 is shown, there may be any number of other target UEs 704-2. Further, although the target UE 704-2 is shown as served by a neighboring base station 702-2, it may be served by the serving base station 702-1.

In some cases, a UE may need to request measurement gaps for UE-UE positioning. A measurement gap is a configured period of time during which the serving cell refrains from transmitting to the UE so that the UE can receive transmissions (e.g., downlink or sidelink reference signals) from other entities, such as other cells or other UEs. The transmissions from the other entities may or may not be on the same frequency as the serving cell. In addition to downlink or sidelink reception, measurement gaps may also be utilized for uplink or sidelink transmissions, including uplink reference signals (such as SRS) or sidelink positioning signals.

Thus, for UE-UE positioning, the initiating UE may request measurement gaps in order to receive positioning signals from the target UE(s) and/or to transmit positioning signals to the target UE(s). The UE may send an RRC message (e.g., UEAssistanceInformation) to the serving base station to request measurement gaps for UE-UE positioning. When approved, the serving base station can configure the UE to send and/or receive positioning signals during the configured gap(s).

There are different options for which entity performs the position calculation. A first option is that the UE performs the calculation. This option is illustrated in FIGS. 6 and 7. As second option is that the location server (e.g., location server 230, LMF 270, SLP 272) performs the calculation. In this option, the initiating UE sends measurements of the received positioning signal(s) and other relevant information to the location server. Likewise, the target UE(s) also report any measurements of positioning signals from the initiating UE to the location server. The initiating UE's serving base station may also report its measurements of any positioning signals to the location server. Based on this information, the location server can calculate the relative UE-UE location for the involved UEs and send the calculation result to the initiating UE via LPP signaling.

The location server may send the positioning report on-demand or periodically. Alternatively, the location server may send the positioning report in response to certain events ("event based"). For example, where the involved UEs are V-UEs and the distance between them is less than a threshold (indicating the possibility of a collision), the location server may send a positioning report to both V-UEs to warn them of the possibility of a collision. While there are use cases for the location server calculating the UE-UE position, it is faster for the involved UEs to calculate the UE-UE position due, for example, to the latency of LPP communication with the location server.

In some cases, however, this latency can be reduced by locating the location server within the RAN, such as at the serving base station or a base station central unit (CU). When located at the serving base station or CU, the location server is sometimes referred to as a location management component (LMC). A CU is a logical node in a 5G RAN that includes gNB functions such as transfer of user data, mobility control, radio access network sharing, positioning, session management etc., except for those functions allocated exclusively to a DU. The CU controls the operation of one or more DUs over a front-haul (Fs) interface. A DU is a logical node that includes a subset of the gNB functions, depending on the functional split between the CU and DU. Its operation is controlled by the CU.

With the location server at the base station or the CU, the signaling between the UE and the location server may be simplified. For example, NRPPa is a base station internal implementation. When the location server is integrated into the base station or CU, the NRPPa functionality would be integrated into the F1 application protocol (F1AP) interface. The F1 interface provides means for interconnecting a gNB-CU and a gNB-DU of a gNB within an NG-RAN. The F1AP interface is defined in 3GPP Technical Specification (TS) 38.473, which is publicly available.

When the location server is located in the RAN, the LPP signaling between the UE and the location server may be replaced by new RRC messages between the UE and the serving base station. The RRC messages should be security protected, such as by transmitting them over signaling radio bearer 1 (SRB1) and/or signaling radio bearer 2 (SRB2). Signaling radio bearers are used for the transfer of RRC and NAS signaling messages. SRB1 is used to transfer RRC messages that use the downlink control channel (DCCH). SRB2 is used to transfer RRC messages that use the DCCH channel and encapsulates a NAS message. SRB2 has a lower priority then SRB1 and is configured after security activation.

Alternatively, to minimize UE impact, the LPP messages may still be carried over RRC signaling. In this case, however, NAS layer encryption should not be used for the LPP messages. In that way, the base station should be able to decode the LPP message from the NAS layer over RRC.

Referring now to the base station assistance data for UE-UE positioning measurements, the base station or location server may directly calculate the UE-UE position based on the involved UEs' measurements of the detected positioning signals. However, the base station may also send assistance data to the UE to enable the UE to calculate the UE-UE position. There are two types of assistance information, common assistance information and UE-specific assistance information. Common assistance information may be sent in SIBs, shared radio network temporary identifiers (RNTIs), 5G multicast/broadcast services (MBS), or any combination thereof. UE-specific assistance information may be sent by dedicated RRC, PC5 RRC, or the like. Note that it is also possible to multicast to the associated UEs by a shared RNTI. UE-specific assistance information may include the base station's measurements of the positioning signals transmitted by the involved UEs (particularly useful when there is no LOS path between the two UEs), the base station's estimated UE-UE positioning result, the base station's estimated location of the other UE(s), the base station's measured angle of arrival (AoA), SSB ID, and/or the timing advance (TA) of the other UE(s), or any combination thereof, as available.

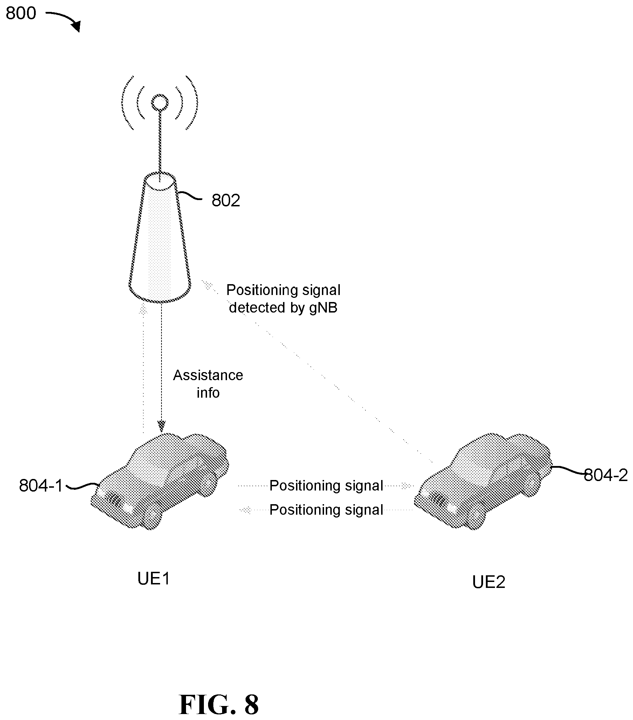

**FIG.** 8 is a diagram 800 of an exemplary base station-assisted UE-UE positioning procedure between a serving base station 802, an initiating UE 802-1 (labeled "UE1"), and a target UE 802-2 (labeled "UE2"). As illustrated in FIG. 8, each of the initiating UE 802-1 (which may correspond to any of the UEs described herein) and the target UE 802-2 (which may correspond to any other of the UEs described herein) receive (e.g., over a sidelink) and measure the positioning signal(s) from the other UE 804. The UEs 804 may measure, for example, the ToA of the respective positioning signals to determine the distance between them, as described above with reference to FIGS. 4 and 5.

In the example of FIG. 8, both UEs 804 are served by the same base station 802 (which may correspond to any of the base stations described herein). The base station 802 detects each UE's 804 positioning signal(s) and performs positioning measurements on them (e.g., ToA). The base station 802 can then provide these measurements to the initiating UE 804-1 as assistance information to enable the initiating UE 804-1 to calculate the UE-UE position.

Referring now to the radio resource configuration for UE-UE positioning measurements, the base station configures the radio resources for the UE-UE positioning measurements. This includes a configuration for the UE to transmit the positioning signal and a configuration for the UE to detect the positioning signal from the other UE(s) and the base station (if transmitted).

There are multiple options for the UE-UE positioning measurement. For example, there is a sidelink-based option, a Uu-based option, and a radar-based option, a WLAN option, a Bluetooth^{®} option, and a laser option. The base station may configure the UE with one more of the options. For the sidelink based option, the radio resource configuration identifies the resources (e.g., time, frequency), the sequence to transmit, and the sequences to detect/measure. For the Uu-based option, the radio resource configuration includes the SRS/PTRS configuration, the discontinuous reception (DRX) and discontinuous transmission (DTX) configuration, the PRS configuration, and the SSB-based time window.

The configuration for a UE (whether an initiating or target UE) to transmit a positioning signal (e.g., PRS) includes the following parameters:
- *PRS-SequenceId*: This parameter determines the sequence used for PRS. It can be explicitly configured in RRC and/or MAC control element (MAC-CE) or by any association that may exist between PRS and a physical sidelink shared channel (PSSCH) or channel state information reference signal (CSI-RS) or a subchannel.
- *PRS-ReOffset*: This parameter defines the starting resource element (RE) offset of the first symbol within a sidelink PRS resource in the frequency domain.
- *PRS-ResourceSlotOffset*: This parameter determines the starting slot of the sidelink PRS resource with respect to a reference. The reference can be explicitly configured to the UE in RRC or can be derived according to a MAC-CE and/or sidelink control information (SCI) message, or can be implicitly determined by an association that may exist between PRS and a PSSCH or CSI-RS or a subchannel.
- *PRS-ResourceSymbolOffset*: This parameter determines the starting symbol of the sidelink PRS resource within the starting slot.
- *PRS-NumSymbols*: This parameter defines the number of symbols of the sidelink PRS resource within a slot. In RRC, multiple such values may be configured, and the final downselection is accomplished by MAC-CE or SCI.
- *PRS-StartPRB*: This parameter defines the starting physical resource block (PRB) index of the sidelink PRS resource with respect to a reference. The reference can be explicitly configured in RRC/MAC-CE/SCI or implicitly determined by any association that may exist between PRS and a PSSCH or CSI-RS or a subchannel
- *PRS-CombSizeN*: This parameter defines the comb size of a sidelink PRS resource. In RRC, multiple such values may be configured, and the final downselection is accomplished by MAC-CE or SCI.
- *PRS-MutingPattern*: This parameter defines a bitmap of the time locations where the PRS resource is expected to not be transmitted.
- *PRS-ResourceRepetitionFactor*: This parameter defines how many times each sidelink PRS resource is repeated for a single instance of the downlink PRS resource set.
- *DL-PRS-QCL-Info*: QCL information (average delay or spatial receive beam) that can refer to sidelink reference signals or Uu reference signals.
- *PRS-expectedRSTD*: This parameter defines the time difference with respect to the received downlink or sidelink subframe timing the UE is expected to receive sidelink PRS, and *PRS-expectedRSTD-uncertainty*, which defines a search window around the *PRS-expectedRSTD.*

If part of the above PRS configuration is received by LPP, then it is not the serving base station that configures those parameters but rather the location server.

The configuration for a UE to detect the positioning signal(s) (e.g., PRS) from (an)other UE(s) includes the same configuration parameters as shown above. These parameters can be configured (by RRC), activated (by MAC-CE), or triggered (by SCI) to enable the UE to start the measuring. Multiple combinations of the parameters {*PRS-SequenceId* , *PRS-ReOffset, PRS-ResourceSlotOffset, PRS-ResourceSymbolOffset, PRS-NumSymbols, PRS-StartPRB, PRS-CombSizeN*, *PRS-MutingPattern*, *PRS-ResourceRepetitionFactor*} can be configured in RRC, and then the base station could activate or deactivate one or more of those combinations with MAC-CE or SCI. The parameters {*PRS-SubcarrierSpacing*, *PRS-CyclicPrefix*} may be implicitly determined by the subcarrier spacing (SCS) and cyclic prefix (CP) configured in the sidelink subchannel, unless a sidelink measurement gap is used, in which case, these parameters can also be configured by RRC/MAC-CE or SCI.

As above, if part of the above PRS configuration is received by LPP, then it is not the serving base station that configures those parameters but rather the location server.

The radio resources the base station configures for a UE to detect a positioning signal for UE-UE positioning may also include a configuration for the UE to detect a regular communication signal (e.g., SRS, PSSCH, demodulation reference signal (DMRS) of PSSCH) from other UEs and the base station.

Referring to the radar-based option for radio resource configuration, this may apply to a use case where the UE is equipped with *n* radio frequency (RF) front ends (where *n* is greater than or equal to '2'). For example, if the UE is equipped with an FR1 and FR2 RF front end, the UE can camp on FR1, and if FR2 is not deployed by the network operator, then FR2 can be used for UE-to-UE radar detection.

For radar detection, there are passive and proactive modes for echo detection. In passive echo detection, the UE transmitting the positioning signal (one or more of the involved UEs) transmits a radar signal to the other UE(s) and receives echoes that are reflected from those UE(s). Proactive echo detection is similar to an airplane control tower where an airplane receives a ping from the tower and sends back an amplified echo. In this case, the transmitting UE transmits a radar waveform embedded with *L* bits (e.g., 10-12) of the transmitting UE's identifier. The receiving UE acquires the waveform and sends back a different waveform embedded with *L* bits of that UE's identifier.

In some cases, an OFDM-based waveform can be used as the radar signal. In this case, a signature of *L* bits can be encoded in a frequency domain of OFDM resource blocks (RBs). In some cases, a time-domain waveform can be used as the radar signal. In this case, a pulse modulated time-domain waveform can be used instead of an OFDM-based waveform.

Other options for the radio resource configuration include WLAN configurations, Bluetooth^{®} configurations, laser configurations, and the like.

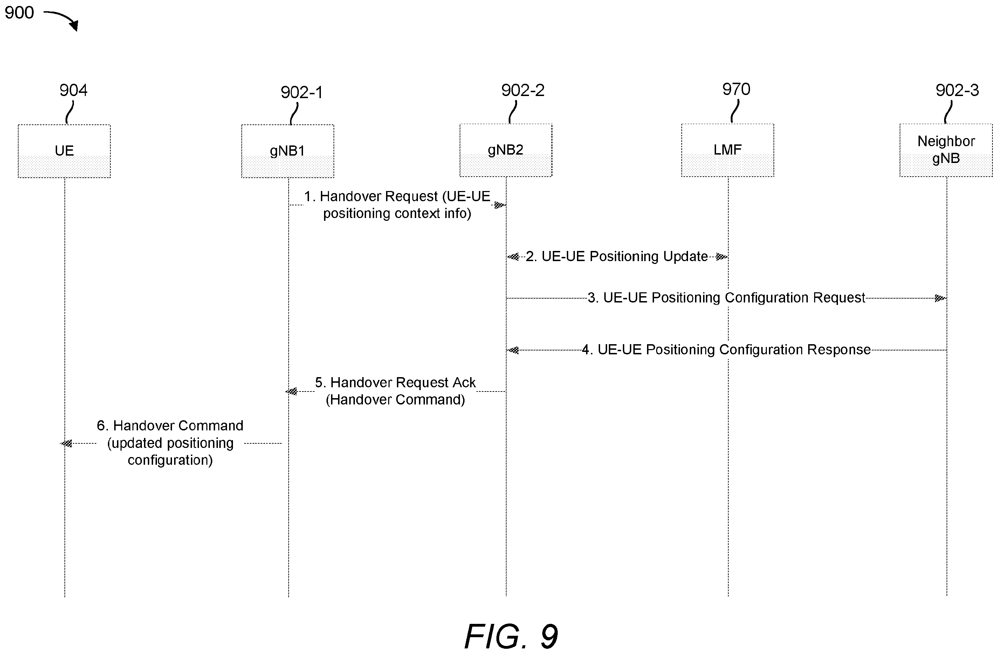

Referring now to mobility (e.g., handover) procedures for base station-assisted UE-UE positioning, when a UE hands over from one base station to another, the UE-UE positioning context should be transferred to the target base station. **FIG. 9** illustrates a call flow 900 of an exemplary handover procedure during a base station-assisted UE-UE positioning procedure, according to aspects of the disclosure. At stage 1, the base station 902-1 (labeled "gNB1") currently serving a UE 904 (e.g., any of the UEs described herein) sends a handover request to a target base station 902-2 (labeled "gNB2"). The handover request includes the UE-UE positioning context (e.g., current radio resource configuration(s), any measurements, etc.) for an ongoing UE-UE positioning procedure.

At stage 2, the target base station 902-2 and the LMF 970 perform a UE-UE positioning update to inform the LMF 970 that the target base station 902-2 will be the new serving base station for UE 904. However, if the UE 904 did not send a UE-UE positioning request to the LMF 970, meaning that the LMF 970 is not involved in the UE-UE positioning session, then stage 2 is not needed.

At stages 3 and 4, the target base station 902-2 sends a UE-UE positioning request to any involved neighboring base stations 902-3 and receives a confirmation response in return. This exchange updates the neighboring base station(s) 902-3 regarding the change in serving base station for the UE 904 for the UE-UE positioning session. Note that it is also possible to update the neighboring base station(s) 902-3 after the handover.

At stage 5, the target base station 902-2 sends a handover request acknowledgment (ACK), which includes a handover command, to the current serving base station 902-1. The target base station 902-2 may adjust the radio resource configuration and send the new configuration parameters in the handover command. At stage 6, the current serving base station 902-1 sends the handover command, including any updated radio resource configuration parameters, to the UE 904. In response, the UE 904 hands over from the base station 902-1 to the target base station 902-2 and continues the UE-UE positioning session.

Referring now to UE-UE positioning procedures when in RRC INACTIVE mode, after a random-access procedure (also referred to as a (physical) random-access channel ((P)RACH) procedure) to gain network access, a UE is in an RRC CONNECTED state. The RRC protocol is used for the air interface between the UE and the base station. In LTE, a UE may be in one of two RRC states (CONNECTED or IDLE), and in NR, a UE may be in one of three RRC states (CONNECTED, IDLE, or INACTIVE). The different RRC states have different radio resources associated with them that the UE can use when it is in a given state.

A UE may be transitioned to the RRC INACTIVE state (as instructed by the serving base station) for power savings. If the UE needs to perform a UE-UE positioning procedure while in the RRC INACTIVE state, then the serving base station can send the positioning configuration to the UE in the RRC release message that transitions the UE to the RRC INACTIVE state. The RRC release message may indicate (e.g., include configuration parameters for) the positioning signal to send and the positioning signal to receive (if any), as well as any assistance information for the positioning calculation. When a UE-specific configuration update needs to be sent to the UE, the base station can bring the UE back to the RRC CONNECTED state by paging the UE. If the UE resumes RRC from a different base station, the UE's context, including UE-UE positioning context, should be transferred from the previous base station to the new base station.

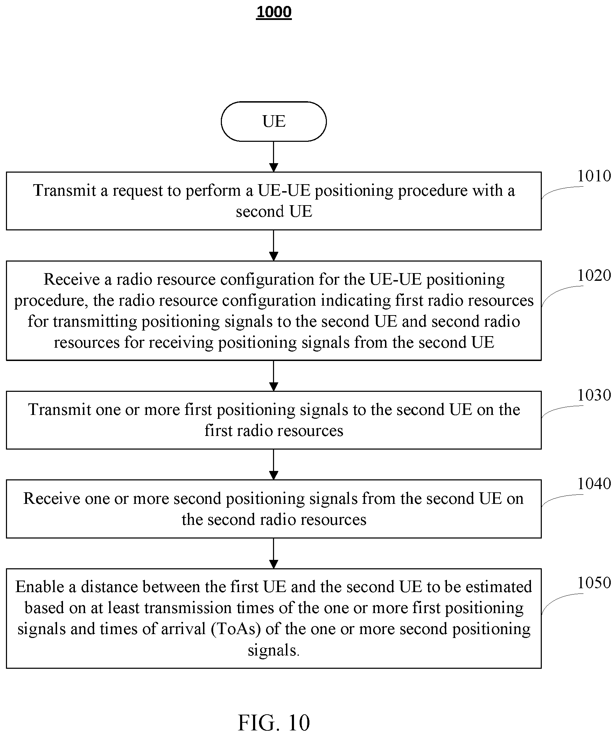

**FIG. 10** illustrates an exemplary method 1000 for wireless positioning, according to aspects of the disclosure. In an aspect, the method 1000 may be performed by a first UE (e.g., any of the UEs described herein).

At 1010, the first UE transmits a request to perform a UE-UE positioning procedure with a second UE (e.g., any other of the UEs described herein). In an aspect, operation 1010 may be performed by WWAN trasnceiver 310, processing system 332, memory component 340, and/or positioning component 342, any or all of which may be considered means for performing this operation.

At 1020, the first UE receives a radio resource configuration for the UE-UE positioning procedure, the radio resource configuration indicating first radio resources for transmitting positioning signals to the second UE and second radio resources for receiving positioning signals from the second UE. In an aspect, operation 1020 may be performed by WWAN trasnceiver 310, processing system 332, memory component 340, and/or positioning component 342, any or all of which may be considered means for performing this operation.

At 1030, the first UE transmits one or more first positioning signals to the second UE on the first radio resources. In an aspect, operation 1030 may be performed by WWAN trasnceiver 310, processing system 332, memory component 340, and/or positioning component 342, any or all of which may be considered means for performing this operation.

At 1040, the first UE receives one or more second positioning signals from the second UE on the second radio resources. In an aspect, operation 1040 may be performed by WWAN trasnceiver 310, processing system 332, memory component 340, and/or positioning component 342, any or all of which may be considered means for performing this operation.

At 1050, the first UE enables a distance between the first UE and the second UE to be estimated based on at least transmission times of the one or more first positioning signals and ToAs of the one or more second positioning signals. In an aspect, operation 1050 may be performed by WWAN trasnceiver 310, processing system 332, memory component 340, and/or positioning component 342, any or all of which may be considered means for performing this operation.

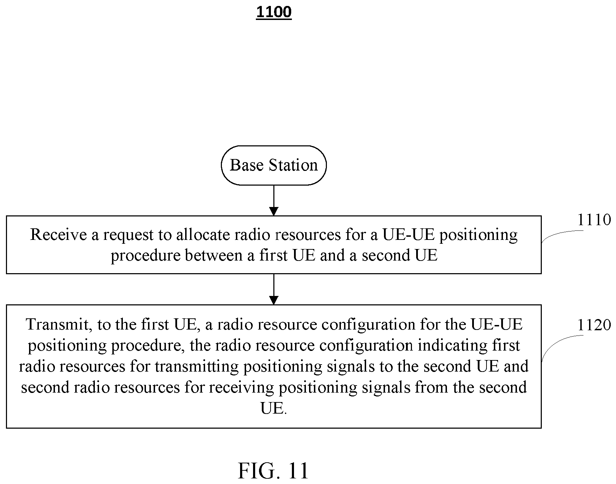

**FIG. 11** illustrates an exemplary method 1100 for wireless positioning, according to aspects of the disclosure. In an aspect, the method 1000 may be performed by a first UE (e.g., any of the UEs described herein).

At 1110, the base station receives a request to allocate radio resources for a UE-UE positioning procedure between a first UE (e.g., any of the UEs described herein) and a second UE (e.g., any other of the UEs described herein). In an aspect, operation 1110 may be performed by WWAN trasnceiver 350, processing system 384, memory component 386, and/or positioning component 388, any or all of which may be considered means for performing this operation.

At 1120, the base station transmits, to the first UE, a radio resource configuration for the UE-UE positioning procedure, the radio resource configuration indicating first radio resources for transmitting positioning signals to the second UE and second radio resources for receiving positioning signals from the second UE. In an aspect, operation 1110 may be performed by WWAN trasnceiver 350, processing system 384, memory component 386, and/or positioning component 388, any or all of which may be considered means for performing this operation.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a DSP, an ASIC, an FPGA, or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method (1000) for wireless positioning performed by a first vehicle user equipment, V-UE (604-1), comprising:
receiving, from a serving base station (602-1) of the first V-UE (604-1), a notification that a second V-UE (604-2) is proximate the first V-UE (604-1), the notification including an identifier of the second V-UE (604-2);
transmitting (1010), to a location server (670) that is in communication with the serving base station (602-1) of the first V-UE (604-1), an LPP message including a request to perform a UE-UE positioning procedure with the second V-UE (604-2), the request to perform the UE-UE positioning procedure including the identifier of the second V-UE (604-2);
receiving (1020), from the serving base station (602-1), a radio resource configuration for the UE-UE positioning procedure, the radio resource configuration indicating first radio resources for transmitting positioning signals to the second V-UE (604-2) and second radio resources for receiving positioning signals from the second V-UE (604-2);
transmitting (1030) one or more first positioning signals to the second V-UE (604-2) on the first radio resources;
receiving (1040) one or more second positioning signals from the second V-UE (604-2) on the second radio resources; and
estimating (1050) a distance between the first V-UE (604-1) and the second V-UE (604-2) based on at least transmission times of the one or more first positioning signals and times of arrival, ToAs, of the one or more second positioning signals.

2. The method of claim 1, further comprising:
transmitting, to the serving base station (602-1) of the first V-UE (604-1), a request for measurement gaps for the UE-UE positioning procedure,
wherein the radio resource configuration includes one or more measurement gaps in which to transmit the one or more first positioning signals, receive the one or more second positioning signals, or both.

3. The method (1000) of claim 1, wherein the first V-UE (604-1) has a subscription with a wireless network operator that permits the first V-UE to participate in the UE-UE positioning procedure.

4. The method (1000) of claim 1, further comprising:
transmitting a type of the first V-UE (604-1) in non-access strutum, NAS, signaling during network registration.

5. The method (1000) of claim 1, wherein:
the first V-UE (604-1) receives the notification from the serving base station (602-1) via unicast; or
the first V-UE (604-1) receives the nofication from the serving base station (602-1) via broadcast or multicast signaling to at least the first V-UE (604-1) and the second V-UE (604-2).

6. The method (1000) of claim 1, wherein the second V-UE (604-2) is determined to be proximate the first V-UE (604-1) based on:
the first V-UE (604-1) and the second V-UE (604-2) being served by the same cell,
the first V-UE (604-1) and the second V-UE (604-2) being served by different cells supported by the same base station (602-1), or
the first V-UE (604-1) and the second V-UE (604-2) being served by different base stations (602-1, 602-2) within a threshold distance of each other, wherein the threshold distance is such that the first V-UE (604-1) and the second V-UE (604-2) are expected to be within sidelink communication range of each other.

7. The method (1000) of claim 1, further comprising:
receiving, from the serving base station (602-1) of the first V-UE (604-1), assistance information, the assistance information comprising common assistance information and UE-specific assistance information; wherein the UE-specific assistance information preferably comprises:
ToA measurements of the one or more first positioning signals,
ToA measurements of the one or more second positioning signals,
an esimate of the distance between the first V-UE (604-1) and the second V-UE (604-2),
an estimate of a location of the second V-UE (604-2),
an estimate of an angle of arrival (AoA) of the one or more second positioning signals,
a syncrhonization signal block (SSB) identifier associated with the second V-UE,
a timing advance associated with the second V-UE (604-2), or
any combination thereof.

8. The method (1000) of claim 1, wherein the first radio resources for transmitting positioning signals to the second V-UE (604-2) and the second radio resources for receiving positioning signals from the second V-UE (604-2) comprise:
sidelink resources,
Uu interface resources,
radar resources,
wireless local area network, WLAN, resource,
Bluetooth^{®} resources,
laser resource, or
any combination thereof; and
wherein the sidelink resources preferably comprise:
time domain resources,
frequency domain resources,
a sequence of the one or more first positioning signals,
a sequence of the one or more second positioning signals, or
any combination thereof; and
wherein the Uu interface resources preferably comprise:
a downlink reference signal configuration for the one or more first positioning signals,
an uplink reference signal configuration for the one or more second positioning signals,
a discontinuous reception configuration,
a discontinuous transmission configuration,
an SSB-based time window, or
any combination thereof; and
wherein the radar resources preferably comprise:
a frequency of the one or more first positioning signals,
a frequency of the one or more second positioning signals,
waveform parameters of the one or more first positioning signals,
waveform parameters of the one or more second positioning signals,
a time domain pattern of the one or more first positioning signals,
a time domain pattern of the one or more second positioning signals, or
any combination thereof.

9. The method (1000) of claim 1, further comprising:
receiving, from from the serving base station (602-1) of the first V-UE (604-1), a handover command, the handover command including a second radio resource configuration for the UE-UE positioning procedure, the second radio resource configuration indicating third radio resources for transmitting positioning signals to the second UE (604-2) and fourth radio resources for receiving positioning signals from the second UE (604-2);
transmitting one or more third positioning signals to the second V-UE (604-2) on the third radio resources;
receiving one or more fourth positioning signals from the second V-UE (604-2) on the fourth radio resources; and
estimating (1050) the distance between the first V-UE (604-1) and the second UE (604-2) based on at least transmission times of the one or more third positioning signals and ToAs of the one or more fourth positioning signals.

10. The method (1000) of claim 1, wherein:
the first V-UE (604-1) is in an RRC inactive mode, and
the radio resource configuration is received in an RRC release message.

11. A method (1100) for wireless positioning performed by a base station, comprising:
determining that a second Vehicle user equipment, V-UE, is proximate to a first V-UE;
transmitting, to the first V-UE, a notification that the second V-UE (604-2) is proximate the first V-UE (604-1), the notification inlcuding an identifier of the second V-UE (604-2);
receiving (1110), from a location management server in communication with the first V-UE, a request to allocate radio resources for a UE-UE positioning procedure between the first V-UE and the second V-UE; and
transmitting (1120), to the first V-UE, a radio resource configuration for the UE-UE positioning procedure, the radio resource configuration indicating first radio resources for transmitting positioning signals to the second V-UE and second radio resources for receiving positioning signals from the second V-UE.

12. The method (1110) of claim 11, wherein the second V-UE is determined to be proximate the first V-UE based on:
the first V-UE and the second V-UE being served by the same cell,
the first V-UE and the second V-UE being served by different cells supported by the same base station, or
the first V-UE and the second V-UE being served by different base stations within a threshold distance of each other, wherein the threshold distance is such that the first V-UE and the second V-UE are expected to be within sidelink communication range of each other.

13. A first vehicle user equipment, V-UE (604-1), comprising:
means for receiving, from a serving base station of the first V-UE, a notification that a second V-UE is proximate the first V-UE, the notification including an identifier of the second V-UE;
means for transmitting (1010), to a location server that is in communication with the serving base station of the first V-UE, an LLP message including a request to perform a UE-UE positioning procedure with the second V-UE, the request to perform the UE-UE position procedure including the identifier of the second V-UE;
means for receiving (1020), from the serving base station, a radio resource configuration for the UE-UE positioning procedure, the radio resource configuration indicating first radio resources for transmitting positioning signals to the second V-UE and second radio resources for receiving positioning signals from the second V-UE;
means for transmitting (1030) one or more first positioning signals to the second V-UE on the first radio resources;
means for receiving (1040) one or more second positioning signals from the second V-UE on the second radio resources; and
means for estimating (1050) a distance between the first V-UE and the second V-UE based on at least transmission times of the one or more first positioning signals and times of arrival, ToAs, of the one or more second positioning signals.

14. A base station, comprising:
means for determining that a second vehicle user equipment, V-UE, is proximate to a first V-UE;
means transmitting, to the first V-UE, a notification that the second V-UE is proximate the first V-UE, the notification inlcuding an identifier of the second V-UE;
means for receiving (1110), from a location management server in communication with the first V-UE, a request to allocate radio resources for a UE-UE positioning procedure between the first V-UE, and the second V-UE; and
means for transmitting (1120), to the first V-UE, a radio resource configuration for the UE-UE positioning procedure, the radio resource configuration indicating first radio resources for transmitting positioning signals to the second V-UE and second radio resources for receiving positioning signals from the second V-UE.

15. A non-transitory computer-readable medium storing computer-executable instructions, the computer-executable instructions being executable by one or more processors of a vehicle user equipment, V-UE, to cause the V-UE to perform the method (1000) according to any one of claims 1 to 10, or the computer-executable instructions being executable by one or more processors of a base station to cause the base station to perform the method (1100) according to claim 11 or claim 12.

## Patentansprüche

1. Verfahren (1000) zur drahtlosen Ortung, durchgeführt von einem ersten V-UE (Vehicle User Equipment) (604-1), das Folgendes beinhaltet:
Empfangen, von einer bedienenden Basisstation (602-1) des ersten V-UE (604-1), einer Benachrichtigung, dass sich ein zweites V-UE (604-2) in der Nähe des ersten V-UE (604-1) befindet, wobei die Benachrichtigung eine Kennung des zweiten V-UE (604-2) enthält;
Senden (1010), zu einem Standort-Server (670), der mit der bedienenden Basisstation (602-1) des ersten V-UE (604-1) in Verbindung steht, einer LPP-Nachricht mit einer Anforderung zum Durchführen einer UE-UE-Ortungsprozedur mit dem zweiten V-UE (604-2); wobei die Aufforderung zum Durchführen der UE-UE-Ortungsprozedur die Kennung des zweiten V-UE (604-2) enthält;
Empfangen (1020), von der bedienenden Basisstation (602-1), einer Funkressourcenkonfiguration für die UE-UE-Ortungsprozedur, wobei die Funkressourcenkonfiguration erste Funkressourcen zum Senden von Positionssignalen zum zweiten V-UE (604-2) und zweite Funkressourcen zum Empfangen von Positionssignalen vom zweiten V-UE (604-2) angibt;
Senden (1030) eines oder mehrerer erster Positionssignale zum zweiten V-UE (604-2) über die ersten Funkressourcen;
Empfangen (1040) eines oder mehrerer zweiter Positionssignale vom zweiten V-UE (604-2) über die zweiten Funkressourcen; und
Schätzen (1050) einer Entfernung zwischen dem ersten V-UE (604-1) und dem zweiten V-UE (604-2) auf der Basis zumindest der Sendezeiten der ein oder mehreren ersten Positionssignale und ToAs (Times of Arrival) der ein oder mehreren zweiten Positionssignale.

2. Verfahren nach Anspruch 1, das ferner Folgendes beinhaltet:
Senden einer Anforderung von Messlücken für die UE-UE-Ortungsprozedur zur bedienenden Basisstation (602-1) des ersten V-UE (604-1),
wobei die Funkressourcenkonfiguration eine oder mehrere Messlücken zum Senden der ein oder mehreren ersten Positionssignale und/oder Empfangen der ein oder mehreren zweiten Positionssignale umfasst.

3. Verfahren (1000) nach Anspruch 1, wobei das erste V-UE (604-1) ein Abonnement bei einem Mobilfunknetzbetreiber hat, der es zulässt, dass das erste V-UE an der UE-UE-Ortungsprozedur teilnimmt.

4. Verfahren (1000) nach Anspruch 1, das ferner Folgendes beinhaltet:
Senden eines Typs des ersten V-UE (604-1) in einer NAS-(Non Access Stratum)-Signalisierung während der Netzwerkregistrierung.

5. Verfahren (1000) nach Anspruch 1, wobei:
das erste V-UE (604-1) die Benachrichtigung von der bedienenden Basisstation (602-1) über Unicast empfängt; oder
das erste V-UE (604-1) die Benachrichtigung von der bedienenden Basisstation (602-1) über Broadcast- oder Multicast-Signalisierung an mindestens das erste V-UE (604-1) und das zweite V-UE (604-2) empfängt.

6. Verfahren (1000) nach Anspruch 1, wobei das zweite V-UE (604-2) als in der Nähe des ersten V-UE (604-1) befindlich bestimmt wird, auf der Basis davon, dass:
das erste V-UE (604-1) und das zweite V-UE (604-2) von derselben Zelle bedient werden,
das erste V-UE (604-1) und das zweite V-UE (604-2) von von derselben Basisstation (602-1) unterstützten verschiedenen Zellen bedient werden, oder
das erste V-UE (604-1) und das zweite V-UE (604-2) von verschiedenen Basisstationen (602-1, 602-2) innerhalb einer Schwellenentfernung voneinander bedient werden, wobei die Schwellenentfernung so bemessen ist, dass erwartet wird, dass sich das erste V-UE (604-1) und das zweite V-UE (604-2) innerhalb der Sidelink-Kommunikationsreichweite voneinander befinden.

7. Verfahren (1000) nach Anspruch 1, das ferner Folgendes beinhaltet:
Empfangen von Assistenzinformationen von der bedienenden Basisstation (602-1) des ersten V-UE (604-1), wobei die Assistenzinformationen allgemeine Assistenzinformationen und UE-spezifische Assistenzinformationen umfassen; wobei die UE-spezifischen Assistenzinformationen vorzugsweise Folgendes umfassen:
ToA-Messwerte der ein oder mehreren ersten Positionssignale,
ToA-Messwerte der ein oder mehreren zweiten Positionssignale,
eine Schätzung der Entfernung zwischen dem ersten V-UE (604-1) und dem zweiten V-UE (604-2),
eine Schätzung eines Orts des zweiten V-UE (604-2),
eine Schätzung eines AoA (Angle of Arrival) der ein oder mehreren zweiten Positionssignale,
eine mit dem zweiten V-UE assoziierte SSB-(Synchronization Signal Block)-Kennung,
eine mit dem zweiten V-UE (604-2) assoziierte Zeitvoreilung oder
eine beliebige Kombination davon.

8. Verfahren (1000) nach Anspruch 1, wobei die ersten Funkressourcen zum Senden von Positionssignalen zum zweiten V-UE (604-2) und die zweiten Funkressourcen zum Empfangen von Positionssignalen vom zweiten V-UE (604-2) Folgendes umfassen:
Sidelink-Ressourcen,
Uu-Schnittstellenressourcen,
Radarressourcen,
WLAN-(Wireless Local Area Network)-Ressourcen,
Bluetooth^{®}-Ressourcen,
Laserressourcen oder
eine beliebige Kombination davon; und
wobei die Sidelink-Ressourcen vorzugsweise Folgendes umfassen:
Zeitdomänenressourcen,
Frequenzdomänenressourcen,
eine Sequenz der ein oder mehreren ersten Positionssignale,
eine Sequenz der ein oder mehreren zweiten Positionssignale oder
eine beliebige Kombination davon; und
wobei die Uu-Schnittstellenressourcen vorzugsweise Folgendes umfassen:
eine Downlink-Referenzsignalkonfiguration für die ein oder mehreren ersten Positionssignale,
eine Uplink-Referenzsignalkonfiguration für die ein oder mehreren zweiten Positionssignale,
eine diskontinuierliche Empfangskonfiguration,
eine diskontinuierliche Sendekonfiguration,
ein SSB-basiertes Zeitfenster oder
eine beliebige Kombination davon; und
wobei die Radarressourcen vorzugsweise Folgendes umfassen:
eine Frequenz der ein oder mehreren ersten Positionssignale,
eine Frequenz der ein oder mehreren zweiten Positionssignale,
Wellenformparameter der ein oder mehreren ersten Positionssignale,
Wellenformparameter der ein oder mehreren zweiten Positionssignale,
ein Zeitdomänenmuster der ein oder mehreren ersten Positionssignale,
ein Zeitdomänenmuster der ein oder mehreren zweiten Positionssignale oder
eine beliebige Kombination davon.

9. Verfahren (1000) nach Anspruch 1, das ferner Folgendes beinhaltet:
Empfangen eines Übergabebefehls von der bedienenden Basisstation (602-1) des ersten V-UE (604-1), wobei der Übergabebefehl eine zweite Funkressourcenkonfiguration für die UE-UE-Ortungsprozedur umfasst, wobei die zweite Funkressourcenkonfiguration dritte Funkressourcen zum Senden von Positionssignalen zum zweiten UE (604-2) und vierte Funkressourcen zum Empfangen von Positionssignalen vom zweiten UE (604-2) angibt;
Senden eines oder mehrerer dritter Positionssignale zu dem zweiten V-UE (604-2) über die dritten Funkressourcen;
Empfangen eines oder mehrerer vierter Positionssignale vom zweiten V-UE (604-2) über die vierten Funkressourcen; und
Schätzen (1050) der Entfernung zwischen dem ersten V-UE (604-1) und dem zweiten UE (604-2) auf der Basis zumindest der Sendezeiten der ein oder mehreren dritten Positionssignale und ToAs der ein oder mehreren vierten Positionssignale.

10. Verfahren (1000) nach Anspruch 1, wobei:
das erste V-UE (604-1) in einem RRC-Inaktivmodus ist und
die Funkressourcenkonfiguration in einer RRC-Freigabenachricht empfangen wird.

11. Verfahren (1100) zur drahtlosen Ortung, das von einer Basisstation durchgeführt wird und Folgendes beinhaltet:
Feststellen, dass sich ein zweites V-UE (Vehicle User Equipment) in der Nähe eines ersten V-UE befindet;
Senden, zum ersten V-UE, einer Benachrichtigung, dass sich das zweite V-UE (604-2) in der Nähe des ersten V-UE (604-1) befindet, wobei die Benachrichtigung eine Kennung des zweiten V-UE (604-2) enthält;
Empfangen (1110), von einem Standortverwaltungsserver, der mit dem ersten V-UE in Verbindung steht, einer Anforderung zur Zuweisung von Funkressourcen für eine UE-UE-Ortungsprozedur zwischen dem ersten V-UE und dem zweiten V-UE; und
Senden (1120), zum ersten V-UE, einer Funkressourcenkonfiguration für die UE-UE-Ortungsprozedur, wobei die Funkressourcenkonfiguration erste Funkressourcen zum Senden von Positionssignalen zum zweiten V-UE und zweite Funkressourcen zum Empfangen von Positionssignalen vom zweiten V-UE angibt.

12. Verfahren (1110) nach Anspruch 11, wobei festgestellt wird, dass sich das zweite V-UE in der Nähe der ersten V-UE befindet, auf der Basis davon, dass:
das erste V-UE und das zweite V-UE von derselben Zelle bedient werden,
das erste V-UE und das zweite V-UE von von derselben Basisstation unterstützten verschiedenen Zellen bedient werden, oder
das erste V-UE und das zweite V-UE von verschiedenen Basisstationen innerhalb einer Schwellenentfernung voneinander bedient werden, wobei die Schwellenentfernung so bemessen ist, dass erwartet wird, dass sich das erste V-UE und das zweite V-UE innerhalb der Sidelink-Kommunikationsreichweite voneinander befinden.

13. Erstes V-UE (Vehicle User Equipment) (604-1), das Folgendes umfasst:
Mittel zum Empfangen, von einer bedienenden Basisstation des ersten V-UE, einer Benachrichtigung, dass sich ein zweites V-UE in der Nähe des ersten V-UE befindet, wobei die Benachrichtigung eine Kennung des zweiten V-UE enthält;
Mittel zum Senden (1010), zu einem Standort-Server, der mit der bedienenden Basisstation des ersten V-UE in Verbindung steht, einer LPP-Nachricht mit einer Anforderung zum Durchführen einer UE-UE-Ortungsprozedur mit dem zweiten V-UE; wobei die Aufforderung zum Durchführen der UE-UE-Ortungsprozedur die Kennung des zweiten V-UE enthält;
Mittel zum Empfangen (1020), von der bedienenden Basisstation, einer Funkressourcenkonfiguration für die UE-UE-Ortungsprozedur, wobei die Funkressourcenkonfiguration erste Funkressourcen zum Senden von Positionssignalen zum zweiten V-UE und zweite Funkressourcen zum Empfangen von Positionssignalen vom zweiten V-UE angibt;
Mittel zum Senden (1030) eines oder mehrerer erster Positionssignale zum zweiten V-UE über die ersten Funkressourcen;
Mittel zum Empfangen (1040) eines oder mehrerer zweiter Positionssignale vom zweiten V-UE über die zweiten Funkressourcen; und
Mittel zum Schätzen (1050) einer Entfernung zwischen dem ersten V-UE und dem zweiten V-UE auf der Basis zumindest der Sendezeiten der ein oder mehreren ersten Positionssignale und ToAs (Times of Arrival) der ein oder mehreren zweiten Positionssignale.

14. Basisstation, die Folgendes umfasst:
Mittel zum Feststellen, dass sich ein zweites V-UE (Vehicle User Equipment) in der Nähe eines ersten V-UE befindet;
Mittel zum Senden, zum ersten V-UE, einer Benachrichtigung, dass sich das zweite V-UE in der Nähe des ersten V-UE befindet, wobei die Benachrichtigung eine Kennung des zweiten V-UE enthält;
Mittel zum Empfangen (1110), von einem Standortverwaltungsserver, der mit dem ersten V-UE in Verbindung steht, einer Anforderung zur Zuweisung von Funkressourcen für eine UE-UE-Ortungsprozedur zwischen dem ersten V-UE und dem zweiten V-UE; und
Mittel zum Senden (1120), zum ersten V-UE, einer Funkressourcenkonfiguration für die UE-UE-Ortungsprozedur, wobei die Funkressourcenkonfiguration erste Funkressourcen zum Senden von Positionssignalen zum zweiten V-UE und zweite Funkressourcen zum Empfangen von Positionssignalen vom zweiten V-UE angibt.

15. Nichtflüchtiges, computerlesbares Medium, das computerausführbare Befehle speichert, wobei die computerausführbaren Befehle von einem oder mehreren Prozessoren eines V-UE (Vehicle User Equipment) ausgeführt werden können, um das V-UE zum Durchführen des Verfahrens (1000) nach einem der Ansprüche 1 bis 10 zu veranlassen, oder wobei die computerausführbaren Befehle von einem oder mehreren Prozessoren einer Basisstation ausgeführt werden können, um die Basisstation zum Durchführen des Verfahrens (1100) nach Anspruch 11 oder Anspruch 12 zu veranlassen.

## Revendications

1. Procédé (1000) de positionnement sans fil réalisé par un premier équipement utilisateur de véhicule, V-UE (604-1), comprenant :
la réception, à partir d'une station de base de desserte (602-1) du premier V-UE (604-1), d'une notification qu'un second V-UE (604-2) se trouve près du premier V-UE (604-1), la notification comportant un identifiant du second V-UE (604-2) ;
la transmission (1010), à un serveur de localisation (670) en communication avec la station de base de desserte (602-1) du premier V-UE (604-1), d'un message LPP comportant une demande de réalisation d'une procédure de positionnement UE-UE avec le second V-UE (604-2), la demande de réalisation de la procédure de positionnement UE-UE comportant l'identifiant du second V-UE (604-2) ;
la réception (1020), à partir de la station de base de desserte (602-1), d'une configuration de ressources radio pour la procédure de positionnement UE-UE, la configuration de ressources radio indiquant des premières ressources radio pour émettre des signaux de positionnement vers le second V-UE (604-2) et des deuxièmes ressources radio pour recevoir des signaux de positionnement à partir du second V-UE (604-2) ;
l'émission (1030) d'un ou plusieurs premiers signaux de positionnement vers le second V-UE (604-2) sur les premières ressources radio ;
la réception (1040) d'un ou plusieurs deuxièmes signaux de positionnement à partir du second V-UE (604-2) sur les deuxièmes ressources radio ; et
l'estimation (1050) d'une distance entre le premier V-UE (604-1) et le second VUE (604-2) sur la base au moins de temps d'émission des un ou plusieurs premiers signaux de positionnement et de temps d'arrivée, ToA, des un ou plusieurs deuxièmes signaux de positionnement.

2. Procédé selon la revendication 1, comprenant en outre :
la transmission, à la station de base de desserte (602-1) du premier V-UE (604-1), d'une demande d'espaces de mesure pour la procédure de positionnement UE-UE,
dans lequel la configuration de ressources radio comprend un ou plusieurs espaces de mesure dans lesquels émettre les un ou plusieurs premiers signaux de positionnement, recevoir les un ou plusieurs deuxièmes signaux de positionnement, ou les deux.

3. Procédé (1000) selon la revendication 1, dans lequel le premier V-UE (604-1) a un abonnement avec un opérateur de réseau sans fil permettant au premier V-UE de participer à la procédure de positionnement UE-UE.

4. Procédé (1000) selon la revendication 1, comprenant en outre :
la transmission d'un type du premier V-UE (604-1) dans une signalisation de strate non-d'accès, NAS, durant un enregistrement réseau.

5. Procédé (1000) selon la revendication 1, dans lequel :
le premier V-UE (604-1) reçoit la notification à partir de la station de base de desserte (602-1) par unidiffusion ; ou
le premier V-UE (604-1) reçoit la notification à partir de la station de base de desserte (602-1) par une signalisation de diffusion ou de multidiffusion vers au moins le premier V-UE (604-1) et le second V-UE (604-2).

6. Procédé (1000) selon la revendication 1, dans lequel il est déterminé que le second VUE (604-2) est proche du premier V-UE (604-1) lorsque :
le premier V-UE (604-1) et le second V-UE (604-2) sont desservis par la même cellule,
le premier V-UE (604-1) et le second V-UE (604-2) sont desservis par des cellules différentes prises en charges par la même station de base (602-1), ou
le premier V-UE (604-1) et le second V-UE (604-2) sont desservis par différentes stations de base (602-1, 602-2) en-deçà d'une distance seuil l'une de l'autre, dans lequel la distance seuil est telle que le premier V-UE (604-1) et le second V-UE (604-2) sont censés être à portée de communication en liaison latérale l'un de l'autre.

7. Procédé (1000) selon la revendication 1, comprenant en outre :
la réception, à partir de la station de base de desserte (602-1) du premier V-UE (604-1), d'informations d'assistance, les informations d'assistance comprenant des informations d'assistance communes et des informations d'assistance spécifiques à l'UE ; dans lequel les informations d'assistance spécifiques à l'UE comprennent de préférence :
des mesures de ToA des un ou plusieurs premiers signaux de positionnement,
des mesures de ToA des un ou plusieurs deuxièmes signaux de positionnement,
une estimation de la distance entre le premier V-UE (604-1) et le second V-UE (604-2),
une estimation d'un emplacement du second V-UE (604-2),
une estimation d'un angle d'arrivée (AoA) des un ou plusieurs deuxièmes signaux de positionnement,
un identifiant de bloc de signal de synchronisation (SSB) associé au second VUE,
une avance de synchronisation associée au second V-UE (604-2), ou
n'importe quelle combinaison de ceux-ci.

8. Procédé (1000) selon la revendication 1, dans lequel les premières ressources radio pour émettre les signaux de positionnement vers le second V-UE (604-2) et les deuxièmes ressources radio pour recevoir les signaux de positionnement à partir du second V-UE (604-2) comprennent :
des ressources de liaison latérale,
des ressources d'interface Uu,
des ressources radar,
une ressource de réseau local sans fil, WLAN,
des ressources Bluetooth^{®},
une ressource laser, ou
toute combinaison de celles-ci ; et
dans lequel les ressources de liaison latérale comprennent de préférence :
des ressources de domaine temporel,
des ressources de domaine fréquentiel ;
une séquence des un ou plusieurs premiers signaux de positionnement,
une séquence des un ou plusieurs deuxièmes signaux de positionnement, ou
toute combinaison de celles-ci ; et
dans lequel les ressources d'interface Uu comprennent de préférence :
une configuration de signal de référence de liaison descendante pour les un ou plusieurs premiers signaux de positionnement,
une configuration de signal de référence de liaison montante pour les un ou plusieurs deuxièmes signaux de positionnement,
une configuration de réception discontinue,
une configuration d'émission discontinue,
une fenêtre temporelle basée sur SSB, ou
toute combinaison de celles-ci ; et
dans lequel les ressources radar comprennent de préférence :
une fréquence des un ou plusieurs premiers signaux de positionnement,
une fréquence des un ou plusieurs deuxièmes signaux de positionnement,
des paramètres de forme d'onde des un ou plusieurs premiers signaux de positionnement,
des paramètres de forme d'onde des un ou plusieurs second signaux de positionnement,
un motif de domaine temporel des un ou plusieurs premiers signaux de positionnement,
un motif de domaine temporel des un ou plusieurs second signaux de positionnement, ou
n'importe quelle combinaison de ceux-ci.

9. Procédé (1000) selon la revendication 1, comprenant en outre :
la réception, à partir de la station de base de desserte (602-1) du premier V-UE (604-1), d'une commande de transfert, la commande de transfert comportant une seconde configuration de ressources radio pour la procédure de positionnement UE-UE, la seconde configuration de ressources radio indiquant des troisièmes ressources radio pour émettre les signaux de positionnement vers le second UE (604-2) et des quatrièmes ressources radio pour recevoir les signaux de positionnement à partir du second UE (604-2) ;
l'émission d'un ou plusieurs troisièmes signaux de positionnement vers le second VUE (604-2) sur les troisièmes ressources radio;
la réception d'un ou plusieurs quatrièmes signaux de positionnement à partir du second V-UE (604-2) sur les quatrièmes ressources radio ; et
l'estimation (1050) de la distance entre le premier V-UE (604-1) et le second UE (604-2) sur la base au moins de temps d'émission des un ou plusieurs troisièmes signaux de positionnement et de ToA des un ou plusieurs quatrièmes signaux de positionnement.

10. Procédé (1000) selon la revendication 1, dans lequel :
le premier V-UE (604-1) est dans un mode inactif de RRC, et
la configuration de ressources radio est reçue dans un message de libération de RRC.

11. Procédé (1100) de positionnement sans fil réalisé par une station de base, comprenant :
la détermination qu'un second équipement utilisateur de véhicule, V-UE, est proche d'un premier V-UE ;
la transmission, au premier V-UE, d'une notification indiquant que le second V-UE (604-2) est proche du premier V-UE (604-1), la notification comportant un identifiant du second V-UE (604-2) ;
la réception (1110), à partir d'un serveur de gestion de localisation en communication avec le premier V-UE, d'une demande d'attribution de ressources radio pour une procédure de positionnement UE-UE entre le premier V-UE et le second V-UE ; et
la transmission (1120), au premier V-UE, d'une configuration de ressources radio pour la procédure de positionnement UE-UE, la configuration de ressources radio indiquant des premières ressources radio pour émettre des signaux de positionnement vers le second V-UE et des deuxièmes ressources radio pour recevoir des signaux de positionnement à partir du second V-UE.

12. Procédé (1110) selon la revendication 11, dans lequel il est déterminé que le second VUE est proche du premier V-UE lorsque :
le premier V-UE et le second V-UE sont desservis par la même cellule,
le premier V-UE et le second V-UE sont desservis par des cellules différentes prises en charge par la même station de base, ou
le premier V-UE et le second V-UE sont desservis par différentes stations de base en-deçà d'une distance seuil l'une de l'autre, dans lequel la distance seuil est telle que le premier V-UE et le second V-UE sont censés être à portée de communication en liaison latérale l'un de l'autre.

13. Premier équipement utilisateur de véhicule, V-UE (604-1), comprenant :
un moyen de réception, à partir d'une station de base de desserte du premier V-UE, d'une notification indiquant qu'un second V-UE est proche du premier V-UE, la notification comportant un identifiant du second V-UE ;
un moyen de transmission (1010), à un serveur de localisation en communication avec la station de base de desserte du premier V-UE, d'un message LLP comportant une demande de réalisation d'une procédure de positionnement UE-UE avec le second V-UE, la demande de réalisation de la procédure de positionnement UE-UE comportant l'identifiant du second VUE ;
un moyen de réception (1020), depuis la station de base de desserte, d'une configuration de ressources radio pour la procédure de positionnement UE-UE, la configuration de ressources radio indiquant des premières ressources radio pour émettre des signaux de positionnement vers le second V-UE et des deuxièmes ressources radio pour recevoir des signaux de positionnement à partir du second V-UE ;
un moyen d'émission (1030) d'un ou plusieurs premiers signaux de positionnement vers le second V-UE sur les premières ressources radio ;
un moyen de réception (1040) d'un ou plusieurs deuxièmes signaux de positionnement à partir du second V-UE sur les deuxièmes ressources radio ; et
un moyen d'estimation (1050) d'une distance entre le premier V-UE et le second V-UE sur la base au moins de temps d'émission des un ou plusieurs premiers signaux de positionnement et de temps d'arrivée, ToA, des un ou plusieurs deuxièmes signaux de positionnement.

14. Station de base, comprenant :
un moyen de détermination qu'un second équipement utilisateur de véhicule, V-UE, est proche d'un premier V-UE ;
un moyen de transmission, au premier V-UE, d'une notification indiquant que le second V-UE est proche du premier V-UE, la notification comportant un identifiant du second V-UE ;
un moyen de réception (1110), depuis un serveur de gestion de localisation en communication avec le premier V-UE, d'une demande d'attribution de ressources radio pour une procédure de positionnement UE-UE entre le premier V-UE et le second V-UE ; et
un moyen de transmission (1120), au premier V-UE, d'une configuration de ressources radio pour la procédure de positionnement UE-UE, la configuration de ressources radio indiquant des premières ressources radio pour émettre des signaux de positionnement vers le second V-UE et des deuxièmes ressources radio pour recevoir des signaux de positionnement à partir du second V-UE.

15. Support non transitoire lisible par ordinateur stockant des instructions exécutables par ordinateur, les instructions exécutables par ordinateur étant exécutables par un ou plusieurs processeurs d'un équipement utilisateur de véhicule, V-UE, pour amener le V-UE à réaliser le procédé (1000) selon l'une quelconque des revendications 1 à 10, ou les instructions exécutables par ordinateur étant exécutables par un ou plusieurs processeurs d'une station de base pour amener la station de base à réaliser le procédé (1100) selon la revendication 11 ou la revendication 12.
